# EUROPÄISCHE PATENTANMELDUNG

(11) **EP 4 125 077 A1**
(43) Veröffentlichungstag der Anmeldung: **01.02.2023**
(21) Anmeldenummer: 21187818.6
(22) Anmeldetag: 26.07.2021
(51) Int. Cl.: G09F 3/00, G09F 3/03, G09F 3/02

(54) **FLÄCHIGES VERSIEGELUNGSELEMENT**

(71) Anmelder: Securikett Ulrich & Horn GmbH, 2482 Münchendorf (AT)
(72) Erfinder: Ulrich-Horn, Marietta, 2340 Mödling (AT)
(74) Vertreter: KLIMENT & HENHAPEL

(57) **Zusammenfassung**

Die vorliegende Erfindung betrifft ein flächiges Versiegelungselement (1) zur Applikation auf einen Untergrund (2), umfassend eine Trägerschicht (3) und mehrere Funktionsschichten (4),
wobei die Funktionsschichten (4) mindestens eine Farbdarstellungsschicht (5) und eine haftungssteuernde Schicht (6) umfassen, wobei das Versiegelungselement (1) weiters eine Klebemittelschicht (8) zur Befestigung am Untergrund (2) aufweist,
wobei die Funktionsschichten (4) zwischen der Trägerschicht (3) und der Klebemittelschicht (8) angeordnet sind,
wobei die Trägerschicht (3) zumindest partiell von den Funktionsschichten (4) ablösbar ist, um das Versiegelungselement (1) von einem ersten Zustand (9) in einen zweiten Zustand (10) zu bringen, wobei der zweite Zustand (10) nicht in den ersten Zustand (9) überführbar ist,
wobei das Versiegelungselement (1) im zweiten Zustand (10) eine abgezogene Schicht (11), umfassend zumindest die zumindest partiell abgelöste Trägerschicht (3), und einen Rückstand (12), umfassend zumindest die Klebemittelschicht (8) und zumindest Teile der mindestens einen Farbdarstellungsschicht (5), umfasst,
wobei die Trägerschicht (3) aus Papier hergestellt ist.

## Beschreibung

### GEBIET DER ERFINDUNG

Die gegenständliche Erfindung betrifft ein flächiges Versiegelungselement zur Applikation auf einen Untergrund, umfassend eine Trägerschicht und mehrere Funktionsschichten,
wobei die Funktionsschichten mindestens eine Farbdarstellungsschicht und eine haftungssteuernde Schicht umfassen,
wobei das Versiegelungselement weiters eine Klebemittelschicht zur Befestigung am Untergrund aufweist,
wobei die Funktionsschichten zwischen der Trägerschicht und der Klebemittelschicht angeordnet sind,
wobei die Trägerschicht zumindest partiell von den Funktionsschichten ablösbar ist, um das Versiegelungselement von einem ersten Zustand in einen zweiten Zustand zu bringen,
wobei der zweite Zustand nicht in den ersten Zustand überführbar ist,
wobei das Versiegelungselement im zweiten Zustand eine abgezogene Schicht, umfassend zumindest die zumindest partiell abgelöste Trägerschicht, und einen Rückstand, umfassend zumindest die Klebemittelschicht und zumindest Teile der mindesten einen Farbdarstellungsschicht, umfasst, sowie ein System aus einem Versiegelungselement sowie einem Verpackungselement für Waren.

### STAND DER TECHNIK

Versiegelungselemente, z.B. Versiegelungsfolien, sind an sich im Stand der Technik bereits bekannt. Sie werden dort zu Sicherungszwecken eingesetzt. Neben dem Schutz von Behältern oder Verpackungen vor einem unbefugten Öffnen können flächige Versiegelungselemente auch zur Abdeckung von vertraulichen Informationen oder zur Fixierung von fälschungssicheren Merkmalen eingesetzt werden. Bei den vertraulichen Informationen kann es sich beispielsweise um einen Pin-Code oder einen Identitätscode handeln. Erst durch ein Abziehen der Trägerschicht werden die vertraulichen Informationen für den Betrachter sichtbar. Bei den fälschungssicheren Merkmalen kann es sich beispielsweise um ein Hologramm handeln.

Solche im Stand der Technik bekannten Versiegelungsfolien sind allesamt aus Kunststoff hergestellt. Die Verwendung von Kunststoff als Trägerschicht kann für Papier-basierte Oberflächen, auf die die Versiegelungsfolien appliziert werden, ökologisch nachteilig sein. Werden Papier-basierte Oberflächen gemeinsam mit der Versiegelungsfolie entsorgt und einem Aufbereitungs- bzw. Recyclingverfahren zugeführt, so kann zum einen die Qualität des aufbereiteten Rohstoffes (Papiers) darunter leiden. Zum anderen wird der Rohstoff der Trägerschicht (Kunststoff) keinem geschlossenen Kreislauf zugeführt und geht so als Rohstoff verloren. Auf Grund des geringen Volumens von Versiegelungsfolien im Verhältnis zur Zieloberfläche, auf welche Versiegelungsfolien appliziert werden, werden diese in der Regel keiner werkstofflichen Verwertung zu geführt, sondern - wenn überhaupt - thermisch verwertet. Werden solche kunststoffbasierten Versiegelungsfolien achtlos in der Umwelt entsorgt, so verrotten diese nicht, sondern bleiben lange in der Umwelt bestehen.

Beispielsweise offenbart die AT 9365 U eine Versiegelungsfolie, welche ein einmal erfolgtes Öffnen eines Versiegelungselements eindeutig und irreversibel anzeigt. Die Versiegelungsfolie, genauer deren Trägerschicht, ist in diesem Fall jedoch aus Kunststoff, vorzugsweise Polypropylen, hergestellt.

Die EP 3726506 A1 zeigt ebenfalls eine Versiegelungsfolie, welche zur Sicherung von beispielsweise werthaltigen Gegenständen dient. Deren Trägerschicht, eine Trägerfolie, ist ebenfalls aus transparentem Kunststoff, vorzugsweise aus Polypropylen oder Polyethylen oder Polyethylenterephthalat, hergestellt.

Alle im Stand der Technik bekannten Versiegelungselemente bzw. Versiegelungsfolien basieren wie die beispielhaft genannten auf einer Trägerschicht aus Kunststoff. Es wird allerdings immer wichtiger ökologisch vorteilhafte Produkte herzustellen, um dem für die Gesellschaft immer wichtiger werdenden Umweltschutz gerecht zu werden. Verpackungen werden auf ihre Recyclingfähigkeit im Zuge von rechtlichen und sozialen Anforderungen im Sinne einer Kreislaufwirtschaft bewertet. Die Bewertung erfolgt durch verschiedene Zertifizierungsstellen. Das bedeutet, wenn das herkömmliche Versiegelungselement auf eine umweltverträgliche Verpackung z.B. aus Pappe aufgebracht wird, ist der Verbund aus Versiegelungselement mit einer Kunststoff-Trägerschicht und Verpackung nicht mehr als umweltfreundlich einzustufen. Zusätzlich müssen gegebenenfalls Arbeitsschritte zur Entfernung und fachgerechten Entsorgung dieser Kunststoff-Versiegelungselemente eingebaut werden.

### AUFGABE DER ERFINDUNG

Es ist nun Aufgabe der vorliegenden Erfindung, ein flächiges Versiegelungselement zur Verfügung zu stellen, welches die Nachteile des Stands der Technik überwindet und ökologisch vorteilhaft ist, wobei die Sicherungseigenschaften des flächigen Versiegelungselements bzw. die Manipulationsbeständigkeit gleich oder sogar besser sind als die von im Stand der Technik bekannten Versiegelungsfolien.

### DARSTELLUNG DER ERFINDUNG

Die gestellte Aufgabe wird durch ein flächiges Versiegelungselement gemäß Anspruch 1 gelöst.

Anspruch 1 geht aus von einem flächigen Versiegelungselement zur Applikation auf einen Untergrund, umfassend eine Trägerschicht und mehrere Funktionsschichten,
wobei die Funktionsschichten mindestens eine Farbdarstellungsschicht und eine haftungssteuernde Schicht umfassen,
wobei das Versiegelungselement weiters eine Klebemittelschicht zur Befestigung am Untergrund aufweist,
wobei die Funktionsschichten zwischen der Trägerschicht und der Klebemittelschicht angeordnet sind,
wobei die Trägerschicht zumindest partiell von den Funktionsschichten ablösbar ist, um das Versiegelungselement von einem ersten Zustand in einen zweiten Zustand zu bringen,
wobei der zweite Zustand nicht in den ersten Zustand überführbar ist,
wobei das Versiegelungselement im zweiten Zustand eine abgezogene Schicht, umfassend zumindest die zumindest partiell abgelöste Trägerschicht, und einen Rückstand, umfassend zumindest die Klebemittelschicht und zumindest Teile der mindestens einen Farbdarstellungsschicht, umfasst.

Dabei ist vorgesehen, dass die Trägerschicht aus Papier hergestellt ist.

Die erfindungsgemäße Trägerschicht aus Papier ist eine besonders ökologisch vorteilhafte Form eines Versiegelungselements zu Sicherungszwecken beispielsweise von Faltkartons aus Papier oder Pappe. Vorteilhaft ist insbesondere, dass das erfindungsgemäße Versiegelungselement gemeinsam mit den Verpackungen aus Papier oder Pappe recycelbar ist.

Eine Trägerschicht aus Papier bedeutet, dass das Material der Trägerschicht keinen Kunststoff enthält, d.h. dass die Trägerschicht z.B. nicht aus einem Zellstoff-Kunststoffgemisch hergestellt ist. Bevorzugt ist, dass die Trägerschicht aus Papier nicht mit einer Kunststoffschicht versehen ist. Es ist jedoch nicht ausgeschlossen, dass auf die Trägerschicht aus Papier noch eine zusätzliche Kunststoffschicht oder - kaschierung aufgebracht ist, die so dünn ist, dass die Recyclingfähigkeit der Trägerschicht als Papier nicht eingeschränkt wird. Hierunter fallen etwa Kaschierfolien mit einer Dicke von wenigen Mikrometern, z.B. weniger als 15 Mikrometern. Es ist auch nicht ausgeschlossen, dass die Trägerschicht aus Papier mit Farbe bedruckt ist, um farbig zu erscheinen und/oder um Informationen und/oder Muster darzustellen. Ein weiterer wesentlicher Vorteil der Erfindung ist, dass die Trägerschicht aus einer nachwachsenden Ressource gewonnen wird.

Vorstellbar ist etwa, dass das flächige Versiegelungselement aus Papier auf einem Verpackungskarton aufgebracht wird und in der Folge gemeinsam mit diesem entsorgt und recycelt werden kann. Dadurch entfällt das Entfernen des Versiegelungselements vom Verpackungskarton in einer Recycling- oder Aufbereitungsanlage, was zum Ziel hat die Qualität des Rezyklats zu verbessern. Bei Papier handelt es sich um eine nachwachsende Ressource mit einem etablierten Recyclingsystem.

Darüber hinaus bringt Papier noch weitere wesentliche Vorteile mit sich. So ist beispielsweise ein Versiegelungselement aus Papier noch sicherer als herkömmliche kunststoffbasierte Versiegelungselemente, weil diese gegebenenfalls vorgenommene Manipulationen noch leichter erkennbar machen, weil Papier selbstverständlich wesentlich schneller reißt als Kunststoff. Ein gezieltes Abtrennen mithilfe eines scharfen Gegenstands oder dergleichen wird daher nahezu unmöglich gemacht.

Zusätzlich neigt insbesondere dünnes Papier ganz allgemein auch dazu, wenn es von einer Oberfläche, mit der es zuvor verbunden war, abgezogen wird, sich an den Rändern aufzurollen. Das Papier unterläuft daher einer gewissen Verformung, die nur sehr schwer wieder rückgängig gemacht werden kann. D.h. ein unbemerktes Öffnen und Wiederverschließen wird noch weiter erschwert.

Darüber hinaus wird bei einer Trägerschicht aus Papier eine Manipulation des Versiegelungselements mit Wasser auf Grund der Durchlässigkeit von Papier gegenüber Flüssigkeiten ebenfalls sehr leicht sichtbar. Weil das Wasser durch den Trägerstoff aus Papier diffundieren kann, lösen sich die im Papier verankerten Funktionsschichten vom Trägerstoff zumindest großteils ab, insbesondere wenn die Trägerschicht abgezogen wird, und bleiben gemeinsam mit der Klebstoffschicht zumindest großteils am Untergrund zurück. Insbesondere bei solchen Ausführungsformen der Erfindung, bei welchen Symbole beim Überführen des Versiegelungselement vom ersten in den zweiten Zustand sichtbar werden, ist dies erkennbar, da im feuchten bzw. nassen Zustand des Versiegelungselements lediglich die Trägerschicht selbst abgezogen wird, ohne, dass ein Symbol sichtbar gemacht werden kann. Wird die Trägerschicht in diesem Zustand abgezogen, ist ein neuerliches unbemerktes Zurückkleben der Trägerschicht nicht mehr möglich, da die Trägerschicht keine haftenden Eigenschaften mehr besitzt. Gleichzeitig kann durch eine milchig-weiße Erscheinung des Papiers der Trägerschicht, ein versuchtes Zurückplatzieren optisch wahrgenommen werden kann. Das Versiegelungselement ist nicht mehr funktionsfähig wie erfindungsgemäß vorgesehen, das Versiegelungselement kann nämlich im feuchten, nassen oder anschließend getrockneten Zustand nicht von einem ersten Zustand in einen zweiten Zustand überführt werden. Es kann daher durch die milchig-trübe Erscheinung des Papiers der Trägerschicht eine optische Farbveränderung zumindest in denjenigen Teilbereichen, in denen sich die Funktionsschichten gemeinsam mit der Klebemittelschicht abgelöst haben, wahrgenommen werden, wenn das Versiegelungselement wieder getrocknet ist. Darüber hinaus kann das Versiegelungselement, wenn das Versiegelungselement in einem nassen oder feuchten Zustand abgezogen wurde, wobei sich dadurch die Trägerschicht von den Funktionsschichten und der Klebemittelschicht zumindest in einem Teilbereich gelöst hat, auch nach dem Trocknen der einzelnen Schichten nicht wieder hergestellt werden. D.h. das flächige Versiegelungselement kann auch bei Zurückkleben der abgelösten Schicht und anschließendem Trocknenlassen nicht mehr erfindungsgemäß funktionierend gemacht werden, d.h. das flächige Versiegelungselement kann nicht von einem ersten Zustand in einen zweiten Zustand übergeführt werden, sodass der Farbeffekt sichtbar wird. Ein unlauteres Einsammeln und Wiederverwenden abgewaschener Versiegelungselemente ist daher so nicht möglich.

Sollte das Versiegelungselement aber nicht geöffnet, d.h. die Trägerschicht von den Funktionsschichten und der Klebemittelschicht nicht zumindest bereichsweise abgelöst werden, wenn es feucht bzw. sogar nass geworden ist, dann ist es jedoch möglich, das Versiegelungselement normal weiter zu verwenden, sobald es wieder getrocknet ist. Nach der erfolgten Trocknung kann das Versiegelungselement ganz einfach wie erfindungsgemäß vorgesehen vom ersten Zustand in den zweiten Zustand gebracht werden und ist weiterhin voll funktionsfähig. Dies gilt auch für Versiegelungselemente, in denen im zweiten Zustand ein spezifisches Symbol angezeigt wird. Nach dem Trocknen funktioniert auch diese Ausführungsform der Erfindung wieder.

Um Manipulationsversuche mittels Wasser oder einer anderen Flüssigkeit noch besser anzeigen zu können, kann das flächige Versiegelungselement zusätzlich eine wasserlösliche Farbe aufweisen. In diesem Fall würde durch das Befeuchten bzw. das Nass-Machen des Versiegelungselements die wasserlösliche Farbe freigesetzt werden, die die Manipulation des Versiegelungselements noch leichter sichtbar macht.

Flächig im Zusammenhang mit dem Versiegelungselement bedeutet, dass Breite und Länge des Versiegelungselements erheblich größer sind als die Höhe bzw. Dicke. Vorzugsweise handelt es sich bei dem Versiegelungselement um ein Etikett, wo Länge und Breite festgelegt sind, oder um ein Klebeband, wo also ein Band mit definierter Breite vorliegt und die Länge vom Anwender selbst festgelegt werden kann.

Bei einer besonders vorteilhaften Ausführungsform der Erfindung ist die Trägerschicht transparent oder transluzent, sodass die abgezogene Schicht in zumindest einem Bereich, in dem keine oder lediglich geringe Anteile der mindestens einen Farbdarstellungsschicht anhaften, wenn die abgezogene Schicht deckungsgleich auf dem Rückstand angeordnet ist, einen anderen Farbeindruck aufweist als derselbe Bereich der Trägerschicht im ersten Zustand in einer Blickrichtung auf die Trägerschicht. Das Papier muss also entweder vollständige Transparenz oder einen gewissen Grad an Transluzenz aufweisen, damit dieser Effekt auftritt.

Transparenz im Sinne der gegenständlichen Erfindung bezieht sich auf eine optische Eigenschaft des flächigen Versiegelungselements. Unter Transparenz wird ganz allgemein die Fähigkeit von Materie verstanden, elektromagnetische Wellen hindurchzulassen, wobei sich dies hier insbesondere auf Licht, also auf den für den Menschen sichtbaren Spektralbereich elektromagnetischer Strahlung, bezieht. Die Stoffe werden damit als lichtdurchlässig bezeichnet. Bei den lichtdurchlässigen Stoffen unterscheidet man zwischen durchsichtigen und durchscheinenden Stoffen. Die Lichtdurchlässigkeit ist nicht nur von der Struktur des jeweiligen Stoffes, sondern auch von der jeweiligen Schichtdicke abhängig. Insbesondere ist von der Erfindung eine Trägerschicht mit milchiger Trübung umfasst, die also durchscheinend ist. Umgangssprachlich wird dies auch als "semi-transparent" oder transluzent bezeichnet. Eine Messung der Transparenz der Trägerschicht bzw. des zur Herstellung der Trägerschicht verwendeten Papiers erfolgt durch ein im Stand der Technik bekanntes Messverfahren, nämlich ISO 2470. Festgehalten wird an dieser Stelle, dass im Folgenden mit "transparent" eine Transparenz oder Transluzenz von 100% gemeint ist, mit "transluzent" eine Transluzenz von 20% bis 99,99%. Es wird im Folgenden auch der Begriff "Opazität" verwendet, wobei es sich bei der Opazität um den reziproken Wert der Transluzenz handelt, sodass Transluzenzen selbstverständlich auch durch die Angabe der entsprechenden Opazitäts-Werte möglich ist.

Die erfindungsgemäße Trägerschicht kann damit entweder transparent, d.h. durchsichtig, oder transluzent, d.h. durchscheinend, sein. Erreicht wird die Transparenz bzw. die Transluzenz des Papiers der Trägerschicht durch die Dicke der Trägerschicht und/oder die Glätte des Papiers und/oder durch die Verdichtung des Papiers bei seiner Herstellung, wobei Glätte und Verdichtung etwa durch Kalandrieren erzielt werden kann.

Vorteilhafterweise beträgt die Transparenz bzw. Transluzenz der Trägerschicht aus Papier 20% bis 100%, vorzugsweise 50% bis 100%. Durch das Aufbringen der zumindest einen Funktionsschicht auf die Trägerschicht vermindert sich die natürliche Rauigkeit an der Oberfläche des Papiers. Die Trägerschicht erscheint dann weniger trüb oder milchig, also transparenter. Wird die Trägerschicht von den Funktionsschichten abgelöst, erscheint die Trägerschicht wieder milchiger bzw. weniger transparent. Dieser geänderte Farbeindruck der abgelösten Trägerschicht bleibt bestehen, auch wenn der Benutzer versucht, diese wieder auf den Rückstand anzubringen, denn es wird immer Luft zwischen der Trägerschicht und dem Rückstand bleiben denn beide weisen eine Rauigkeit oder Oberflächenstruktur auf, die es verhindert, dass sie vollständig zueinander zurück positioniert werden können. Zudem neigt die Trägerschicht aus Papier in der Regel dazu, sich nach dem Ablösen zu verformen, sodass das Überführen vom zweiten in den ersten Zustand noch weiter erschwert wird. Das flächige Versiegelungselement kann von einem ersten Zustand in einen zweiten Zustand übergeführt werden, wobei das Überführen durch das zumindest teilweise Ablösen der Trägerschicht von den Funktionsschichten geschieht. Die Folge dieses Überführens von einem ersten in einen zweiten Zustand ist ein geänderter Farbeindruck. Dieser wird dadurch vermittelt, dass eine nicht vollständig transparente, sondern nur durchscheinende Trägerschicht im ersten Zustand auf den Funktionsschichten angeordnet ist.

Wird nun die Trägerschicht zumindest teilweise abgezogen, kommt die darunterliegende Funktionsschicht, also etwa eine Farbdarstellungsschicht, zum Vorschein, d.h. der Rückstand mit der Funktionsschicht erscheint intensiver gefärbt, also nicht mehr milchig getrübt. Die Trägerschicht selbst erscheint nämlich normalerweise milchig trüb und übernimmt so die Aufgabe einer milchig-weißen Farbschicht. Bei Abziehen der Trägerschicht verbleibt ein Rückstand und die Trägerschicht erscheint viel milchiger. Es werden nämlich beim Auftragen der Schichten die Farbdarstellungsschicht und die Trägerschicht so eng aneinander angeordnet aufgebracht, dass die Funktionsschicht, insbesondere eine Farbdarstellungsschicht, teilweise in die Trägerschicht eintritt. Die Manipulationssicherheit ergibt sich, weil die Trägerschicht bzw. die abgezogene Schicht nach dem Abtrennen nicht mehr so eng anliegend mit dem Rückstand verbunden werden kann wie dies beim Herstellungsverfahren erfolgt. Des Weiteren erscheint die Farbe einer durch die abgezogene Schicht betrachtete Farbdarstellungsschicht nicht mehr so intensiv wie vor der Manipulation.

Wenn die abgezogene Schicht wieder deckungsgleich auf dem Rückstand angeordnet wird, dann weist die abgezogene Schicht einen anderen Farbeindruck auf als derselbe Bereich der Trägerschicht im ersten Zustand in einer Blickrichtung auf die Trägerschicht. D.h. wenn ein Betrachter auf ein erfindungsgemäßes Versiegelungselement im ersten Zustand blickt, erscheint ihm dieses optisch anders, als wenn er auf das Versiegelungselement an derselben Stelle im zweiten Zustand des Versiegelungselements blickt. Allerdings muss hierfür die abgezogene Schicht wieder im Wesentlichen deckungsgleich auf den Rückstand angeordnet werden. Im Wesentlichen deckungsgleich bedeutet, dass die abgezogene Schicht möglichst wieder so angeordnet werden sollte auf dem Rückstand, wie sie im ersten Zustand mit dem Rückstand verbunden war.

Der geänderte Farbeindruck wird bei einem Versiegelungselement mit einer transparenten Trägerschicht dadurch erreicht, dass, wenn das Versiegelungselement aus dem ersten Zustand in den zweiten Zustand übergeführt wird, Anteile der Farbe auf der Trägerschicht anhaften bleiben können. Wenn nun die abgezogene Schicht im zweiten Zustand wieder deckungsgleich auf dem Rückstand angeordnet wird, verbleibt naturgemäß Luft zwischen dem Rückstand und der abgezogenen Schicht. Dadurch verändert sich der Farbeindruck des Versiegelungselements für einen Betrachter.

Einer der Vorteile der gegenständlichen Erfindung ist es, dass vergleichsweise beim Einsatz einer transparenten Kunststofffolie als Träger, diese milchig-weiße Farbschicht separat aufgebracht werden müsste, welche hier in der Natur des Papiers durch seine Rauigkeit gegeben ist und keine weitere Veränderung erforderlich ist, um eine solche milchig-trübe Erscheinung zu erreichen.

Es versteht sich jedoch von selbst, dass der besagte geänderte Farbeindruck natürlich nur in jenen Bereichen der Trägerschicht eintritt, in denen im zweiten Zustand keine oder nur geringe Anteile der mindestens einen Farbdarstellungsschicht anhaften. In den übrigen Bereichen, d.h. in jenen Bereichen, in denen weiterhin Farbe anhaftet, ist der geänderte Farbeindruck nicht vorhanden bzw. lediglich kaum erkennbar vorhanden. Geringe Anteile bedeutet insbesondere, dass besonders Farbreste an der Trägerschicht nach dem Überführen vom ersten in den zweiten Zustand weiter anhaften können. Bereichsweise ist es auch möglich, dass größere Farbreste anhaften, in diesem Fall, wird jedoch zumeist nicht mehr die volle Dicke der Farbdarstellungsschicht anhaften, sondern ein Teil der Dicke, beispielsweise die Hälfte, der Farbdarstellungsschicht auf dem Rückstand zurückbleiben, während der andere Teil, zum Beispiel die andere Hälfte, an der Trägerschicht anhaften bleibt.

Um diesen Farbeffekt erkennen zu können, muss die abgezogene Schicht wieder deckungsgleich auf dem Rückstand angeordnet werden. Dies erfolgt, indem die abgezogene Schicht wieder auf den Rückstand angedrückt wird. Allerdings können die Farbdarstellungsschicht bzw. der Rückstand und die Trägerschicht nicht mehr so gut miteinander verbunden werden wie beim Herstellungsverfahren des flächigen Versiegelungselements. Hierzu trägt auch die Verformung der Trägerschicht aus Papier bei. Die Trägerschicht bzw. die abgezogene Schicht rollt sich nämlich beim Überführen in den zweiten Zustand vorzugsweise an den Rändern auf.

Die Ursache für den beobachteten Effekt ist, d.h. die hohe Transparenz im ersten Zustand, dass das Papier eine raue Oberfläche aufweist, was den Abständen zwischen den einzelnen Papierpartikeln geschuldet ist. Wird nun Farbe auf das Papier aufgebracht, füllt diese die Abstände auf, während andererseits im zweiten Zustand eine hohe Opazität zurückkehrt, weil die einzelnen Papierpartikel wieder freigelegt werden, d.h. die Farbe wieder aus den Abständen herausgezogen wird.

Die einfachste Ausgestaltung des erfindungsgemäßen flächigen Versiegelungselements lässt sich im Wesentlichen wie folgt beschreiben: Zwischen der Trägerschicht und der Klebemittelschicht sind als Funktionsschichten lediglich eine haftungssteuernde Schicht und eine Farbdarstellungsschicht angeordnet.

Im zweiten Zustand weist die erfindungsgemäße Versiegelungsfolie eine abgezogene Schicht, umfassend zumindest die Trägerschicht, und einen Rückstand, umfassend zumindest die Klebemittelschicht, der auf dem Untergrund haften bleibt, auf. In der Regel ist direkt auf der Klebemittelschicht eine Farbdarstellungsschicht oder ähnliche Schicht vorgesehen.

In der oben beschriebenen einfachsten Ausführungsform des erfindungsgemäßen flächigen Versiegelungselements wird durch Abziehen der Trägerschicht eben der erfindungsgemäße Farbeffekt erreicht. Das bedeutet, dass in einem ersten Zustand des flächigen Versiegelungselements das Versiegelungselement vollflächig z.B. blau erscheint, weil die Farbdarstellungsschicht blau eingefärbt ist und durch das transluzente Papier durchscheint. Durch Abziehen der abgezogenen Schicht wird das Versiegelungselement in einen zweiten Zustand übergeführt, in dem die Farberscheinung des Rückstands wesentlich intensiver ist. Dies resultiert daraus, dass die Trägerschicht in der Regel milchig-weiß erscheinen wird, sodass die Farbe der Funktionsschichten ohne darüber liegende Trägerschicht selbstverständlich intensiver erscheint.

Die Trägerschicht aus Papier kann für die erfindungsgemäße Anwendung prinzipiell farblos ausgebildet sein oder farbig erscheinen. Farblos bedeutet, dass keine zusätzliche Farbe beigemengt wurde, um die Trägerschicht neben ihrer natürlichen weißlichen Erscheinung zu färben, während bei farbig solche Farben zugegeben wurden. Eine gefärbte Trägerschicht aus Papier kann dennoch transparent oder transluzent oder opak ausgebildet sein.

Selbstverständlich können die Zusammensetzungen des Papiers variieren hinsichtlich des Zellstoffgehalts und/oder der weiteren Zusatzstoffe. Generell werden unter erfindungsgemäßen Papieren solche verstanden, die einschichtig sind und eine flächenbezogene Masse von 8g/m² bis 150g/m², vorzugsweise 30 g/m² bis 120 g/m², besonders bevorzugt 50 g/m², aufweisen.

Dadurch, dass eine Trägerschicht aus Papier in der Regel nicht völlig transparent ist, erscheint die Trägerschicht im Regelfall weiß oder zumindest milchig-weiß. Dadurch übernimmt bereits die Trägerschicht selbst die Funktion einer Farbdarstellungsschicht. Es ist damit, anders als bei herkömmlichen Trägerschichten aus vollständig transparentem Kunststoff, nicht erforderlich, zunächst eine Deckweißschicht oder andere Farbschicht als erste Farbdarstellungsschicht aufzubringen, sondern es kann direkt die Trägerschicht zur Verstärkung des Kontrasts verwendet werden, wenn das flächige Versiegelungselement von einem ersten in einen zweiten Zustand übergeführt wird.

Wenn die abziehbare Schicht nun abgezogen wird, dann wird die Farbdarstellungsschicht von der Trägerschicht bzw. aus der Trägerschicht vollständig oder zumindest partiell herausgelöst. Dadurch, dass die Trägerschicht im Regelfall weiß bzw. milchig-weiß ist, erscheint der Rückstand nach dem Abziehen der abziehbaren Schicht wesentlich farbintensiver, d.h. intensiver dunkelgrau oder dunkelblau im genannten Beispiel. Wird in der Folge versucht, die abgezogene Schicht umfassend die Trägerschicht auf den Rückstand aufzubringen, kann keine so gute Verbindung der Farbdarstellungsschicht mit der Trägerschicht erreicht werden wie vor dem Abziehen, sodass das flächige Versiegelungselement weniger farbintensiv erscheint als vor dem Abziehen der abziehbaren Schicht. D.h. die weiße bzw. milchig-weiße Erscheinung der Trägerschicht tritt wesentlich stärker hervor, wodurch genau erkannt werden kann, dass das flächige Sicherheitselement geöffnet wurde.

In einer Ausführungsform der Erfindung ist vorgesehen, dass alle Schichten zumindest in einem deckungsgleichen Flächenbereich transparent sind oder eine Transluzenz aufweisen.

Vorteilhafterweise wird durch eine solche Ausgestaltung des flächigen Versiegelungselements ermöglicht, dass, wenn das Versiegelungselement auf einen Untergrund, beispielsweise eine Verpackung oder dergleichen, aufgebracht wird, Informationen auf dem Untergrund noch erkennbar bzw. lesbar sind. Erkennbar bzw. lesbar bedeutet, dass das Erkennen bzw. Lesen der Informationen sowohl durch das freie Auge eines menschlichen Betrachters als auch alternativ elektronisch unterstützt möglich ist.

Durch diese Ausführungsform der Erfindung wird es ganz allgemein ermöglicht, auch Informationen bzw. Symbole lesen zu können, welche unterhalb des Versiegelungselements, d.h. zwischen der Klebemittelschicht und dem Untergrund, z.B. dem Packmittel, auf dem Untergrund angeordnet sind. Ein Ablösen oder Öffnen des Versiegelungselements ist damit nicht erforderlich, um die Information lesen zu können. Gleichzeitig bleibt die Information auch lesbar, wenn das Versiegelungselement etwa beim Öffnen der Packung abgelöst wurde. Es ist eine häufige, oft gesetzlich geregelte Vorschrift, dass Informationen, insbesondere Charge, Ablaufdatum und andere Codierungen durch Versiegeln bzw. durch das anschließende Öffnen der Verpackung lesbar bleiben müssen. Zudem wird die Information bzw. das Symbol auf dem Packmittel durch das darüber geklebte Versiegelungselement auch vor Manipulation der Information, etwa durch Ausradieren oder Überschreiben, geschützt.

Um die Informationen erkennen zu können, ist es natürlich erforderlich, dass die Schichten alle im selben Flächenbereich, im Wesentlichen im selben Flächenbereich, transparent sind oder eine Transluzenz aufweisen. Besonders vorteilhaft ist, wenn das Versiegelungselement eine Opazität zwischen 0% und 80%, bevorzugt zwischen 0% und 50%, aufweist. Die Opazität der Funktionsschichten wird gemäß ISO 2471 gemessen.

Dadurch wird sichergestellt, dass ein auf dem Untergrund unterhalb der Kleberschicht angeordnete Information auch dann für einen Betrachter erkennbar ist, wenn sich das flächige Versiegelungselement in einem ersten Zustand, d.h. dem geschlossenen Zustand, befindet. Die Information ist damit auch dann erkennbar, wenn zusätzlich die Trägerschicht auf den Funktionsschichten angeordnet ist. Das Versiegelungselement kann beispielsweise auch eine Opazität von 15%, 25%, 35%, 45%, 55%, 65% oder 75% aufweisen.

Erreicht wird die Transparenz der Funktionsschichten bzw. der Klebemittelschicht durch die Dicke der Schichten und/oder dem Anteil der Farbpigmente in den Schichten.

Wenn die Funktionsschichten und die Klebemittelschicht lediglich in einem deckungsgleichen Flächenbereich transparent bzw. transluzent sind, ist es möglich eine unterhalb dieses Flächenbereichs auf dem Untergrund platzierte Information zu erkennen, während gleichzeitig der übrige Teil des Versiegelungselements opak ausgebildet sein kann.

Besonders vorteilhaft ist in diesem Zusammenhang, wenn das gesamte Versiegelungselement eine Opazität zwischen 0% und 80%, bevorzugt zwischen 0% und 50%, aufweist. Dadurch kann sichergestellt werden, dass die Informationen auf dem Untergrund jedenfalls erkannt werden können.

Um den Transparenz- bzw. Transluzenzeffekt der Trägerschicht zu verstärken, ist in einer Ausführungsform der Erfindung vorgesehen, dass die Funktionsschichten sowie die Klebemittelschicht insbesondere über die ganze Fläche des Versiegelungselements, transparent bzw. transluzent sind. Durch ebenfalls transparente bzw. transluzente Funktionsschichten können Symbole bzw. Informationen, welche unterhalb der Farbdarstellungsschicht und oberhalb der Klebemittelschicht angeordnet sind, auch bei einem Versiegelungselement im ersten Zustand erkannt bzw. gelesen werden.

Alternativ kann bei einer transluzenten Ausgestaltung aller Schichten zumindest in einem deckungsgleichen Flächenbereich auch möglich sein, dass die Informationen nicht exakt erkannt bzw. gelesen werden können, sondern lediglich erahnt werden können. D.h. es kann erkannt werden, dass sich etwas unter dem Versiegelungselement befindet, z.B. ein Code, aber nicht exakt erkannt werden, was das ist. Zum tatsächlichen Erkennen bzw. Lesen des Codes ist es dann erforderlich, dass das Versiegelungselement geöffnet wird.

Um zu verhindern, dass eine auf dem Untergrund angeordnete Information durch ein Versiegelungselement erkannt bzw. gelesen werden kann und um gleichzeitig einen besonders hohen Kontrast zwischen dem ersten und zweiten Zustand herstellen zu können, ist in einer weiteren Ausführungsform der Erfindung vorgesehen, dass die Trägerschicht transluzent ist und die Klebemittelschicht und/oder die Funktionsschichten zumindest in einem deckungsgleichen Flächenbereich opak ist/sind.

Durch die vollständige Opazität der Klebemittelschicht und/oder der anderen Funktionsschichten in diesem deckungsgleichen, bzw. im Wesentlichen deckungsgleichen, Bereich wird sichergestellt, dass Information, welche auf dem Untergrund angeordnet (insbesondere aufgedruckt, eingeprägt, eingeätzt, gelasert) ist, im ersten Zustand nicht erkannt werden kann. Ein Code, der aber beispielsweise auf den Funktionsschichten aufgebracht ist, könnte aber beispielsweise im zweiten Zustand des Versiegelungselements, d.h. wenn die abgezogene Schicht abgelöst wurde, erkannt werden.

Gleichzeitig wird durch die opake Klebemittelschicht und/oder die opaken Funktionsschichten erreicht, dass der Kontrast des erfindungsgemäßen Farbeffekts besonders gut erkannt werden kann. D.h. durch die intensive und gleichzeitig deckende Färbung der Klebemittelschicht und/oder der Farbdarstellungsschichten wird die milchig-trübe Erscheinung der Trägerschicht noch besser erkennbar, wenn das Versiegelungselement von einem ersten Zustand in einen zweiten Zustand übergeführt wird. Durch die intensive Färbung der Funktionsschichten bzw. der Klebemittelschicht wird ein besonders gut zu erkennender Farbeffekt der milchig-trüben Trägerschicht erreicht, da sich der Farbabstand vom ersten zum zweiten Zustand für das menschliche Auge sehr gut erkennbar verändert.

Wenn das flächige Versiegelungselement mit opaken Funktionsschichten und/oder einer opaken Klebemittelschicht verwendet wird, so wirkt das Versiegelungselement in einem ersten Zustand besonders intensiv gefärbt, beispielsweise blau, grau oder grün. Wenn nun das Versiegelungselement in einen zweiten Zustand übergeführt wird, und die abgezogene Schicht wieder deckungsgleich auf dem Rückstand angeordnet wird, ist ein besonders kontrastreicher Farbeffekt zu erkennen. Die Trägerschicht ist nunmehr erkennbar milchig-weiß gefärbt, sodass die Färbung des darunter liegenden Rückstandes wesentlich schwächer ausgebildet ist. Ein derartig ausgeprägter Farbeffekt ist für einen Betrachter sehr gut und schnell zu erkennen.

Für diese Ausführungsform der Erfindung sind Opazitäten der Klebemittelschicht und/oder der Funktionsschichten im Bereich von 30% bis 100%, vorzugsweise 50% bis 100% besonders vorteilhaft. Die Opazität der Funktionsschichten wird gemäß ISO 2471 gemessen.

Besonders vorteilhaft ist in diesem Zusammenhang, wenn das gesamte Versiegelungselement eine Opazität zwischen 30% und 100%, bevorzugt zwischen 50% und 100%, aufweist. Dadurch kann sichergestellt werden, dass die Informationen auf dem Untergrund nicht erkannt werden können. Die Opazität der Funktionsschichten wird gemäß ISO 2471 gemessen.

Um zu verhindern, dass Informationen, welche unterhalb des Versiegelungselements auf der Oberfläche des Untergrunds angeordnet sind, im ersten Zustand in Blickrichtung auf die Trägerschicht erkannt werden können, aber gleichzeitig ermöglicht wird, Informationen im Versiegelungselement zu erkennen, wenn das Versiegelungselement in den zweiten Zustand übergeführt wird, ist in einer weiteren Ausführungsform der Erfindung vorgesehen, dass die Trägerschicht opak ist.

D.h. wenn ein Betrachter auf die Trägerschicht schaut, kann er das darunterliegende restliche Versiegelungselement nicht erkennen. Wenn er jedoch das Versiegelungselement von einem ersten in einen zweiten Zustand überführt, kann er den Rückstand und eventuell darauf angeordnete Informationen erkennen.

Wenn jedoch nur die Trägerschicht opak ausgebildet ist, während die anderen Schichten transluzent oder transparent ausgebildet sind, ist es möglich, nach Überführen in den zweiten Zustand, durch die restlichen Schichten durchzusehen.

Wenn ein solches Versiegelungselement beispielsweise auf einem Verpackungsmittel aus Glas aufgebracht ist, kann eine Manipulation des Versiegelungselements durch die durchsichtige Glasverpackung erkannt werden, weil das flächige Versiegelungselement natürlich auch beim Überführen von einem ersten in den zweiten Zustand den erfindungsgemäßen Farbeffekt aufweist. Wird nun die abgelöste Schicht wieder auf dem Rückstand angeordnet, kann ein Farbeffekt durch das Verpackungsmittel aus Glas, d.h. von der Seite der Klebemittelschicht her, erkannt werden.

Damit eine Schicht, insbesondere die Trägerschicht, als opak, nämlich als blickdicht, bezeichnet werden kann, liegt die Opazität bei mindestens 80%, bevorzugt bei 92% bis 96% und besonders bevorzugt bei 97% bis 100%. Die Opazität der Trägerschicht wird gemäß ISO 2471 gemessen.

Damit wird ebenfalls ein umweltschonendes und leicht wiederverwertbares Versiegelungselement geschaffen, wobei ein in den Funktionsschichten verborgenes Symbol oder ein Code im zweiten Zustand des Versiegelungselements wohl erkennbar wird, nicht aber in einem zurückgeklebten Zustand. Im zurückgeklebten Zustand wäre das verborgene Symbol nur von der Unterseite des Versiegelungselements erkennbar, wenn diese durch ein Glas oder ein durchscheinendes Objekt sichtbar ist.

D.h. prinzipiell funktionieren natürlich alle Ausführungsbeispiele auch mit opakem Papier, allerdings wird festgehalten, dass die bevorzugten Ausführungsformen eine Trägerschicht aus milchig erscheinendem oder durchscheinendem Papier, d.h. Papier mit einer Transluzenz im Bereich von 90% bis 40%, vorzugsweise von 75% bis 60%, aufweist.

Um eine besonders deutliche Änderung des Farbeindrucks des flächigen Versiegelungselements, das zumindest in einem deckungsgleichen Flächenbereich transparent oder transluzent hinsichtlich aller Schichten ist, zu erreichen, ist in einer Ausführungsform der Erfindung vorgesehen, dass jener Bereich der abgezogenen Schicht, dem keine oder nur geringe Anteile der mindestens einen Farbdarstellungsschicht anhaften, wenn die abgezogene Schicht deckungsgleich auf dem Rückstand angeordnet ist, einen Farbabstand Delta E (ΔE) von mehr als 0 bis 7,0, bevorzugt von zumindest 0,1 bis 5,0, und besonders bevorzugt um 0,1 bis 3,0, aufweist gegenüber demselben Bereich der Trägerschicht im ersten Zustand in einer Blickrichtung auf die Trägerschicht. Diese Änderung des Farbabstands Delta E (ΔE) kann mit Hilfe der ISO 11664, z.B. nach ISO 11664-4 oder ISO 11664-6, bestimmt werden.

Solche transparenten bzw. transluzenten Versiegelungselemente, d.h. bei denen sowohl die Trägerschicht als auch die Funktionsschichten und Klebemittelschicht transparent bzw. transluzent sind, und die es damit zulassen im ersten und zweiten Zustand, einen Text oder Code unterhalb eines Versiegelungselements durch das menschliche Auge und/oder elektronisch gestützte Lesegeräte, z.B. Kameras, zu erkennen bzw. zu lesen, weisen vorzugsweise eine Opazität von 0% bis 80%, vorzugsweise 0% bis 50%, auf. Diese Opazität kann durch die ISO 2471 bestimmt werden.

Der Unterschied zwischen Farben wird durch den Farbabstand Delta E angegeben, der die Koordinatendifferenz im Lab oder im Luv Farbraum darstellt. Da diese Farbräume visuell gleichabständig sind, kann daher dieser Wert für den sichtbaren Unterschied zwischen 2 Farben herangezogen werden. Die visuelle Unterschiedsempfindung ist nicht bei allen Farben gleich, jedoch kann gesagt werden, dass der Wert Delta E = 1 in der Regel als Grenze des sichtbaren Farbunterschiedes festgelegt wurde. Um den Farbunterschied zu erkennen, müssen Proben, d.h. die zu vermessenden Versiegelungselemente, längere Zeit (bei kleinen Delta E Werten circa 20 Sekunden) betrachtet werden. Allgemein gilt, dass bei Delta E < 1 ein nicht sichtbarer Farbunterschied, bei Delta E=1-3 ein sehr geringer Farbunterschied, der nur für geschulte Augen erkennbar ist, bei Delta E= 3-5 sichtbarer Farbunterschied und Delta E>6 ein deutlich sichtbarer Farbunterschied wahrgenommen wird. Bei gesättigten Farben ist der Lab Delta E zu groß im Vergleich zur visuellen Wahrnehmung, während Helligkeitsunterschiede zu wenig berücksichtigt werden. Von der Regel, dass Delta E = 1 als Grenze des erkennbaren Farbunterschieds festgelegt wird, gibt es jedoch auch nach oben und unten Ausnahmen. Beispielsweise sind bei Grautönen auch schon Delta E Werte kleiner 1 als Farbabweichung sichtbar. Hingegen ist bei bunten Farben, wie beispielsweise Orange, auch noch bei L*a*b Delta E = 4 kaum ein Farbunterschied erkennbar.

Allerdings können vom geschulten Auge bzw. mit technischen Hilfsmitteln auch schon geringere bzw. höhere Farbunterschiede festgestellt werden. So ist es für ein geschultes Auge bereits möglich, den erfindungsgemäßen Farbeffekt und damit Farbabstand Delta E (ΔE) von 0,1 bei Versiegelungselementen mit transluzenten bzw. transparenten Schichten zu erkennen. Auch ein Farbabstand der gerundet 0 ergibt, ist mit Hilfe von technischen Hilfsmitteln erkennbar. In diesem Zusammenhang können vor allem sogenannte lumineszierende Farben verwendet werden. Das heißt, auch wenn ein Farbabstand Delta E (ΔE) beispielsweise 0,015 besteht und kein Farbunterschied durch das menschliche Auge festgestellt werden kann, kann unter Zuhilfenahme von technischen Hilfsmitteln, z.B. einer Schwarzlichtlampe, durch das menschliche Auge ein sehr deutlicher Unterschied festgestellt werden.

Die Änderung des Farbabstands Delta E (ΔE) wird bestimmt mit dem Modell eines dreidimensionalen Farbenraums, bei dem die Lichtintensität Delta L (ΔL) senkrecht auf der Farbebene (a*,b*) steht. Der Lichtintensität Delta L (ΔL) kann Werte von 0 (Schwarz) bis 100 (Weiß) annehmen.

Bei transluzenten Versiegelungselementen ist es für das Auge eines Betrachters selbstverständlich etwas schwieriger den erfindungsgemäßen Farbeffekt zu erkennen, da dieser insgesamt etwas schwächer ausgeprägt ist. Dennoch kann der farbliche Unterschied der Trägerschicht im ersten und zweiten Zustand des Versiegelungselements gut erkannt werden.

Prinzipiell können transluzente Versiegelungselemente jegliche Farbe aufweisen. Vorzugsweise zählen dazu jedoch Farben wie beispielsweise Weiß, Beige, Hellgrau, Hellgelb, Gelb, Orange, Lindgrün, Hellblau, Hellgrau, Rosa und Flieder. Selbstverständlich werden dadurch jedoch andere Farben nicht davon ausgeschlossen. Auch ist selbstverständlich nicht ausgeschlossen, dass der Farbabstand Delta E (ΔE) bei einzelnen Farben höher ist als 7, beispielsweise 8, 9, 10, 15, 20, 25 oder 30.

Um einen gut erkennbaren erfindungsgemäßen Farbeffekt auf für einen Betrachter von Versiegelungselementen mit opaker Klebemittelschicht und/oder Funktionsschichten bereitstellen zu können, ist in einer Ausführungsform der Erfindung vorgesehen, dass jener Bereich der abgezogenen Schicht, dem keine oder nur geringe Anteile der mindestens einen Farbdarstellungsschicht anhaften, wenn die abgezogene Schicht (11) deckungsgleich auf dem Rückstand angeordnet ist, einen Farbabstand Delta E (ΔE) von zumindest 0 bis 90, bevorzugt von zumindest 7 bis 50, aufweist gegenüber demselben Bereich der Trägerschicht im ersten Zustand in einer Blickrichtung auf die Trägerschicht.

Bei Versiegelungselementen mit einer opaken Klebemittelschicht und/oder opaken Funktionsschichten ist es für das Auge eines Betrachters selbstverständlich in der Regel etwas einfacher den erfindungsgemäßen Farbeffekt zu erkennen, da dieser auf Grund der intensiven bzw. deckenden Wirkung der opaken Schichten normalerweise stärker ausgeprägt ist. Dadurch kann der farbliche Unterschied der Trägerschicht im ersten und zweiten Zustand des Versiegelungselements besonders gut erkannt werden. Die opaken Funktionsschichten und/oder die opake Klebemittelschicht sind in der Regel intensiv gefärbt, sodass keine Störung der farbigen Erscheinung des flächigen Versiegelungselements durch einen gegebenenfalls ebenfalls intensiv gefärbten Untergrund erfolgt.

Prinzipiell können solche Versiegelungselemente jegliche Farbe aufweisen. Vorteilhafte Farben, d.h. solche, die besonders opak bzw. besonders gut deckend sind, sind beispielsweise Schwarz, Blau, Braun, Dunkelgrau sowie Hellgrau. Selbstverständlich werden dadurch jedoch andere Farben nicht ausgeschlossen.

Vorteilhaft daran ist, dass der Farbeindruck bzw. das Aussehen des Versiegelungselements nicht durch den darunterliegenden Untergrund gestört wird. D.h. der Farbeindruck, der die Manipulationssicherheit bedingt, wird nicht durch eine Färbung des Untergrunds gestört. Ein derartiges Versiegelungselement kann auf einem Untergrund jeder beliebigen Farbe aufgebracht werden, weil der Farbeffekt nicht negativ beeinflusst werden kann. Es ist daher auch nicht störend, sollte der Untergrund stark gemustert oder intensiv gefärbt sein.

Normalerweise können Versiegelungselemente mit opaker Klebemittelschicht und/oder opaken Funktionsschichten insbesondere Farbabstände Delta E (ΔE) im Bereich von 7 bis 50 aufweisen (wobei niedrigere - Werte von 2 bis 4 sind z.B. schon deutlich erkennbar - oder höhere Werte nicht ausgeschlossen sind), allerdings besteht auch insbesondere mit weiteren technischen Hilfsmitteln die Möglichkeit höhere und niedrigere Farbabstände zu erkennen. Auch ein Farbabstand der gerundet 0 ergibt, ist mit Hilfe von technischen Hilfsmitteln erkennbar. In diesem Zusammenhang können vor allem sogenannte lumineszierende Farben verwendet werden. Der Farbabstand Delta E (ΔE) kann in diesem Zusammenhang unter einer Schwarzlichtlampe ermittelt werden, sodass dann mit dem menschlichen Auge auch Farbunterschiede von beispielsweise 0,015 erkannt werden können.

Da die Erfindung besonders gut mit kalandriertem Papier zu verwirklichen ist, ist in einer Ausführungsform der Erfindung vorgesehen, dass die Trägerschicht aus kalandriertem Papier hergestellt ist.

Kalandriertes oder auch satiniertes Papier genannt werden Papiere, bei denen eine Einebnung und Glättung der Oberfläche bei der Papierherstellung erfolgt. D.h. es wird beim Glättungsvorgang unter Druck eine glatte Fläche aus der noch rauen Papierbahn hergestellt. Vorzugsweise wird dies mittels eines Kalanders während eines Walzvorgangs erreicht. Entsprechende Kalander-Vorrichtungen sind im Stand der Technik bereits bekannt. Die Rauigkeit des Papiers wird beim Kalandrieren zwar reduziert, aber die dadurch erzielte Glätte ist üblicherweise nicht so hoch wie bei geblasenen, gereckten oder gegossenen Kunststofffolien.

Kalandriertes Papier ist deshalb besonders gut für das erfindungsgemäße Versiegelungselement geeignet, weil dadurch besonders gut transparentes bzw. transluzentes Papier hergestellt werden kann. Transparentes bzw. transluzentes Papier ermöglicht es einem Anwender bereits bei bloßem Betrachten die zwischen der Trägerschicht und der Klebemittelschicht angeordnete Farbdarstellungsschicht zu erkennen. Oder der Anwender kann durch die Trägerschicht hindurch eine unterhalb der Trägerschicht oder unterhalb des Versiegelungselements angebrachte Information erkennen.

Selbstverständlich kann aber durch Kalandrieren auch opakes Papier hergestellt werden.

In einer Ausführungsform der Erfindung ist vorgesehen, dass das Versiegelungselement weiters eine zweite haftungssteuernde Schicht zwischen der Trägerschicht und der Klebemittelschicht umfasst, um beim Ablösen der Trägerschicht zumindest Teile der mindestens einen Farbdarstellungsschicht herauszutrennen und an der Trägerschicht anzuhaften. Bei einem derartigen Aufbau des Versiegelungselements entsteht im Zuge des Ablösens der Trägerschicht mindestens ein Symbol, wobei durch die mindestens zwei haftungssteuernden Schichten zumindest ein definierter Bereich aus der mindestens einen Farbdarstellungsschicht herausgetrennt wird, die das mindestens eine Symbol ausbilden. D.h. das im zweiten Zustand des flächigen Versiegelungselements erkennbare mindestens eine Symbol bleibt vor dem erstmaligen Öffnen des erfindungsgemäßen Versiegelungselements für einen Betrachter verborgen und ist erst nach der Öffnung optisch sichtbar. Die einfachste Form eines Symbols ist, wenn das Symbol einer vollständigen Fläche entspricht, sodass sich bei Überführen des Versiegelungselements in einen zweiten Zustand lediglich die Farbe der gesamten von der abziehbaren Schicht bedeckten Farbdarstellungsschicht ändert. Dies erfolgt dadurch, dass die Farbfunktionsschichten eng auf die Trägerschicht aufgebracht werden, wobei die Farbdarstellungsschicht teilweise in die Trägerschicht eingebracht wird. Das flächige Versiegelungselement erscheint daher beispielsweise hellgrau, dunkelgrau oder dunkelblau.

Wenn das flächige Versiegelungselement noch weitere Farbdarstellungsschichten und/oder haftungssteuernde Schichten umfasst, kann die abgezogene Schicht durch die Trägerschicht und Teile bzw. vollständige weitere Funktionsschichten gebildet werden. Den Rückstand bildet im einfachsten Fall nur die Klebemittelschicht und die Farbdarstellungsschicht. Sollte ein Versiegelungselement weitere Funktionsschichten aufweisen, kann der Rückstand auch noch weitere Schichten bzw. Teile von Schichten umfassen.

Das Abziehen und damit Überführen in den zweiten Zustand des Versiegelungselements kann durch eine Lasche erleichtert werden. Die Lasche kann dabei ein zusätzliches an der Trägerschicht angeordnetes Element darstellen, oder aber einen Teil der Trägerschicht darstellen, auf den keine Funktionsschichten aufgetragen werden und der seitlich über die Funktionsschichten und die Klebemittelschicht hinausragt.

Sollte erwünscht sein, dass die abgezogene Schicht sich nicht vollständig vom restlichen flächigen Versiegelungselement trennt, kann, z.B. am Rand des Versiegelungselements, ein Bereich vorgesehen werden, in welchem Bereich keine haftungssteuernde Schicht(en) aufgetragen werden, sodass sich die Funktionsschichten untrennbar mit der Trägerschicht verbinden. Ein vollständiges Abziehen der abgezogenen Schicht ist dadurch lediglich durch eine stärkere Aufwendung von Kraft möglich, welche jedoch im Normalfall das Versiegelungselement beschädigen würde. Die abgezogene Schicht verbleibt damit auf dem flächigen Versiegelungselement. Dadurch wird der Schwund des Versiegelungselements in die Umwelt verringert. Das Versiegelungselement kann somit gemeinsam mit dem Untergrund, auf dem es angeordnet ist, der werkstofflichen Verwertung zugeführt werden.

Das erfindungsgemäße Versiegelungselement kann grundsätzlich auf jeden beliebigen Untergrund aufgebracht werden, auf dem die Klebemittelschicht haftet. Je nach Beschaffenheit des Untergrunds kann die Zusammensetzung der Klebemittelschicht daher entsprechend adaptiert werden. Vorzugsweise wird es sich beim Untergrund aber um Oberflächen oder eine Verpackung aus den Packstoffen Papier, Karton, Pappe oder Wellpappe handeln, um mit diesem Untergrund gemeinsam einer werkstofflichen Verwertung zugeführt zu werden. Allerdings kommen natürlich auch Untergründe aus Kunststoff, Metall oder Glas in Betracht. Solche Untergründe können dann aber oft nicht gemeinsam mit dem flächigen Versiegelungselement verwertet werden.

Um ein Papier als Trägerschicht mit besonders guten Eigenschaften zur Verfügung stellen zu können, ist in einer Ausführungsform der Erfindung vorgesehen, dass die Trägerschicht aus Papier eine flächenbezogene Masse von 8 g/m² bis 150 g/m², vorzugsweise von 30 g/m² bis 120 g/m², besonders bevorzugt von 50 g/m² aufweist. Bei einer flächenbezogenen Masse von 50 g/m² sind die Transparenz bzw. Transluzenz und mechanischen Eigenschaften des Papiers für ein Versiegelungselement sichergestellt. Papiere mit Grammaturen bis 50 g/m² können gut als durchscheinendes Versiegelungselement Verwendung finden, während Papiere mit höherer Grammatur eher als abdeckende Versiegelungselemente geeignet sein können. Für abdeckende Varianten des Versiegelungselemente eignen sich besonders gut hochkalandrierte Papiere mit einer flächenbezogenen Masse von 50 g/m² bis 90 g/m².

Um Trägerschichten aus Papier mit besonders guter Transparenz bzw. Transluzenz oder auch Opazität und guten Verarbeitungseigenschaften, aber dennoch hinreichender mechanischer Festigkeit herstellen zu können, ist in einer Ausführungsform der Erfindung vorgesehen, dass die Trägerschicht aus Papier eine Bruchkraft längs im Bereich von 30N bis 90N, vorzugsweise von 35N bis 80N, aufweist. Dies gilt insbesondere für kalandrierte Papiere, wo eine geringe Bruchkraft das erfolgreiche Manipulieren verringern kann. Für Anwendungen mit einer opaken Trägerschicht aus Papier, etwa für Klebebänder, können größere Bruchkräfte sinnvoll sein, damit das Klebeband ausreichend robust ist.

Die Messung der Bruchkraft längs der Trägerschicht bzw. des zur Herstellung der Trägerschicht verwendeten Papiers erfolgt durch ein im Stand der Technik bekanntes Messverfahren, nämlich gemäß ISO 1924-2.

Um ein noch stabileres Versiegelungselement herstellen zu können, ist in einer Ausführungsform der Erfindung vorgesehen, dass eine weitere Trägerschicht zwischen den Funktionsschichten und der Klebemittelschicht oder zwischen zwei Funktionsschichten angeordnet ist.

Vorzugsweise ist diese weitere Trägerschicht selbstverständlich auch aus Papier, da das flächige Versiegelungselement dann als eines entsorgt werden kann bzw. recycelt werden kann. Allerdings ist nicht ausgeschlossen, dass diese zweite Trägerschicht aus anderen Zelluloseprodukten oder aus Kunststoff ist, sofern dies für besondere Ausführungen des Versiegelungselements erforderlich ist.

Diese weitere Trägerschicht ermöglicht es das Versiegelungselement stabiler auszuführen, was bei Klebebändern erwünscht sein kann.

Auch könnte die weitere Trägerschicht Informationen wie z.B. Pincodes enthalten, welche durch die erste Trägerschicht ganz oder teilweise abgedeckt werden, aber bei Überführen in den zweiten Zustand, d.h. beim Öffnen, dann erkennbar werden.

Um die weitere Trägerschicht ebenfalls manipulationssicher zu machen, kann diese mit Sollbruchstanzungen gegen unbemerktes Abziehen gesichert werden, oder wiederum weitere Funktionsschichten für einen Farbumschlag zugeordnet haben.

Die allfällige weitere Trägerschicht kann kongruent mit der ersten Trägerschicht sein, aber auch kleiner oder größer, etwa um ein Ablösen der ersten Trägerschicht zu erleichtern.

Diese zweite Trägerschicht kann wie die erste Trägerschicht sowohl transparent, transluzent oder opak ausgebildet sein, entsprechend der Verwendung im Zusammenhang mit den offenbarten Ausführungsformen.

Um möglichst flexibel anwendbare flächige Versiegelungselemente zur Verfügung stellen zu können, ist in einer Ausführungsform der Erfindung vorgesehen, dass das Versiegelungselement ein Etikett ist.

Als Etikett werden insbesondere Klebeetiketten zu Sicherungszwecken von werthaltigen oder sensiblen Produkten und deren Verpackungen verstanden oder auch zum Verbergen von Codes oder Barcodes.

Um dem Anwender zu ermöglichen, die Größe des Versiegelungselements je nach Anwendung selbst festzulegen, ist in einer Ausführungsform der Erfindung vorgesehen, dass das flächige Versiegelungselement ein Klebeband ist. Ein Klebeband ermöglicht es flächenmäßig größere bzw. längere Versiegelungselemente auf einen Wertgegenstand bzw. dessen Verpackung aufzubringen, wodurch das unbemerkte Manipulieren der Sicherung noch weiter erschwert wird. Um es zu ermöglichen, ein flächiges Versiegelungselement in Form eines Klebebandes aufrollen zu können, ist in einer Ausführungsform der Erfindung vorgesehen, dass das Versiegelungselement auf der Trägerschicht auf der den Funktionsschichten abgewandten Seite weiters eine Silikonschicht umfasst. Durch das Vorhandensein der Silikonschicht wird es ermöglicht, das Klebeband auf eine Rolle aufzurollen, da die Silikonschicht verhindert, dass die Außenseite der Klebemittelschicht an der Außenseite der Trägerschicht anhaftet. Durch das Aufrollen ist eine bessere und platzsparendere Lagerung möglich, zudem wird eine zusätzliche Abdeckschicht einspart, indem die Trägerschicht gleichzeitig als Abdeckschicht fungiert.

Um vor Gebrauch eine Lagerung des flächigen Versiegelungselements ohne Verminderung der Klebeeigenschaften der Klebemittelschicht zu ermöglichen, ist in einer Ausführungsform der Erfindung vorgesehen, dass auf der Klebemittelschicht auf der den Funktionsschichten abgewandten Seite eine silikonisierte Abdeckschicht aus Papier oder Kunststoff zum Schutz der Klebemittelschicht angeordnet ist.

Diese Abdeckschicht verhindert, dass das flächige Versiegelungselement bei einer Lagerung, d.h. vor dem Einsatz als Sicherung, an irgendeinem Untergrund unerwünschter Weise kleben bleibt. Durch das unerwünschte Klebenbleiben könnte das flächige Versiegelungselement bei starker Haftung sogar unbrauchbar gemacht werden, weil es sich vom Untergrund nicht mehr ablösen lässt, ohne die Funktion zu beeinträchtigen.

Um eine besonders leicht lösbare temporäre Abdeckung der Klebemittelschicht bereitstellen zu können, ist in einer Ausführungsform der Erfindung vorgesehen, dass die Abdeckschicht aus silikonisiertem hochkalandriertem Papier oder aus silikonisiertem Polyethylenterephthalat hergestellt ist.

Um eine Manipulation durch vollständiges Ablösen des flächigen Versiegelungselements zu erschweren oder um das Durchtrennen des Versiegelungselements zur Öffnung einer Verpackung zu erleichtern, ist in einer Ausführungsform der Erfindung vorgesehen, dass das flächige Versiegelungselement Stanzungen aufweist.

Papier ist in der Regel weniger reißfest als Kunststoff, sodass Papier bei mechanischer Ablösung, etwa durch Untergreifen mit einer Klinge, ohnehin eher reißt und eine Manipulation sichtbar wird. Insbesondere kann, wenn eine zweite Trägerschicht aus Papier an der Klebemittelschicht vorgesehen ist, diese Stanzungen, etwa Perforationen oder Sollbruchstellen, aufweisen.

Stanzungen durch alle Schichten ermöglichen beispielsweise auch das komfortable Abreißen eines flächigen

Versiegelungselements von einer Rolle von Versiegelungselementen.

Generell können durch entsprechende Anordnung von mehreren Farbdarstellungsschichten und haftungssteuernden Schichten gleichzeitig mehrere Symbole in mehreren anders gefärbten Teilbereichen dargestellt werden, wobei der Kontrast der Farben im ersten und zweiten Zustand des Versiegelungselements so groß ist, dass die Symbole gut erkennbar sind.

So kann vorgesehen sein, dass der im zweiten Zustand ersichtliche herausgetrennte definierte Bereich, d.h. das mindestens eine Symbol, der mindestens einen Farbdarstellungsschicht nicht unmittelbar an der Trägerschicht oder an der Klebemittelschicht anhaftet, sondern kann diese auch mittelbar über eine oder mehrere weitere an der Trägerschicht bzw. an der Klebemittelschicht angeordnete Funktionsschichten anhaften.

Durch die Funktionsschichten wird etwas optisch Wahrnehmbares, z.B. eine Farbe, eine Information oder ein Code, erzeugt oder es entsteht, beispielsweise mittels haftungssteuernder Schichten, ein Effekt. D.h. Funktionsschichten ist der Überbegriff für beispielsweise die Farbdarstellungsschichten und die haftungssteuernden Schichten. Aber es können auch weitere Farbdarstellungsschichten, weitere haftungssteuernde Schichten oder lediglich Zwischenschichten, etwa Füllschichten, mit der Bezeichnung Funktionsschichten gemeint sein. Selbstverständlich ist auch nicht ausgeschlossen, dass die Funktionsschichten lediglich transparent oder transluzent sind, wenn die Trägerschicht als einzige Farbschicht fungiert.

Die Farbdarstellungsschichten wiederum können eine oder mehrere Aufbauschichten umfassen. D.h. abhängig von der Farbe einer Farbdarstellungsschicht umfasst die Farbdarstellungsschicht eine oder mehrere Aufbauschichten.

Eine herkömmliche dunkelgraue Farbdarstellungsschicht umfasst aufgrund des in der Praxis stattfinden Druckprozesses beispielsweise eine weiße und schwarze Aufbauschicht. Mit der gegenständlichen Erfindung könnte man ein dunkelgrau erscheinendes Versiegelungselement auch mit Hilfe nur einer schwarzen Aufbauschicht erzeugen, die von einem milchig durchscheinenden Papier abgedeckt wird.

Es wäre vorstellbar, dass die Funktionsschichten vorzugsweise im Flexodruck-, Siebdruck-, Buchdruck-, Offsetdruck- oder Digitaldruckverfahren aufeinander aufgebracht werden.

Erst durch das Ablösen der Trägerschicht, d.h. durch das Überführen in den zweiten Zustand, wird entweder ein anderer Farbeindruck oder überhaupt ein Symbol sichtbar. Das bedeutet, dass in einem ersten Zustand des flächigen Versiegelungselements der Farbeindruck ein anderer ist bzw. dass das mindestens eine Symbol für einen Betrachter nicht erkennbar ist, sondern das Versiegelungselement in jedem Fall als einfarbig gefärbte Fläche bzw. als mehrfarbig gedruckte Fläche erscheint. Unerkennbar sind jedoch die Färbung im zweiten Zustand bzw. die verborgenen Symbole.

Die einzelnen Farbdarstellungsschichten können unterschiedliche oder gleiche Farbe aufweisen, sie können opak, semi-opak, transluzent oder transparent sein. Eine Farbdarstellungsschicht könnte abschnittsweise aus unterschiedlichen Farben, die beispielsweise streifenförmig oder rasterförmig oder in Form von Bildern und/oder Mustern angeordnet sein können, bestehen. Ein Sonderfall der Farbdarstellungsschicht enthält keine Farbpartikel und erscheint daher farblos.

Des Weiteren ist nicht ausgeschlossen, dass das flächige Versiegelungselement weiters einen Code umfasst, wobei der Code Teil des Versiegelungselements, vorzugsweise Teil der Funktionsschichten, die zwischen der Trägerschicht und der Klebemittelschicht angeordnet sind, und/oder Teil der Klebemittelschicht ist. Ein (weiterer) Code könnte sich sonst auch direkt auf dem Untergrund, z.B. der Verpackung, befinden und durch das Versiegelungselement sichtbar sein oder erst im zweiten Zustand des Versiegelungselements sichtbar werden.

Sofern ein Lesen des Codes im nicht abgezogenen Zustand verhindert werden soll, kann mindestens eine der Farbdarstellungsschichten opak sein oder ein Störmuster enthalten oder der Code kann sich aus anderen Gründen optisch nicht abheben oder das Papier der Trägerschicht kann opak sein.

Die Aufgabe der Erfindung wird ebenfalls gelöst durch ein System aus einem flächigen Versiegelungselement und einem Verpackungsobjekt für Waren. Das Versiegelungselement entspricht dabei einem Versiegelungselement wie in den Ausführungsformen der Ansprüche 1 bis 15 ausgeführt. Der in den Ansprüchen 1 bis 15 genannte Untergrund ist somit das Verpackungsobjekt.

Als Verpackungsobjekt für Waren werden dabei insbesondere Verpackungen aus Karton, Metall, Glas oder Kunststoff angesehen, die dazu geeignet sind, dass Waren unterschiedlicher Art darin verpackt werden. Als Beispiele können hierfür insbesondere Verpackungen für sensible Waren wie Pharmazeutika oder technische Geräte angesehen werden, bei denen eine gewissenhafte Kennzeichnung besonders wichtig ist. Allerdings sind selbstverständlich andere Verpackungsarten bzw. Waren nicht ausgeschlossen. Das flächige Versiegelungselement könnte dazu eingesetzt werden, um die Öffnung des Verpackungsobjekts anzuzeigen, und/oder um fälschungssichere Merkmale oder Objektidentifikationscodes sicher zu befestigen.

In einer Ausführungsform des Systems ist dabei erfindungsgemäß vorgesehen, dass alle Schichten des Versiegelungselements zumindest in einem deckungsgleichen Flächenbereich transparent sind oder eine Transluzenz aufweisen, sodass das Erkennen von unter der Klebemittelschicht auf der Oberfläche des Verpackungselements aufgebrachten Informationen für Waren zumindest in einem Teilbereich möglich ist. Das Erkennen der Information ist damit im ersten Zustand des Versiegelungselements möglich. Ein Öffnen des Versiegelungselements ist damit nicht erforderlich, um die Information lesen zu können.

Transparent bedeutet, dass die Transluzenz 100% beträgt, d.h. dass das Versiegelungselement vollkommen durchsichtig ist und die Informationen unterhalb des Versiegelungselements auf dem Untergrund erkennbar und lesbar sind.

Dieses Erkennen und Lesen kann sowohl mit dem freien Auge eines Betrachters oder maschinell unterstützt erfolgen.

In einer anderen Ausführungsform der Erfindung ist vorgesehen, dass die Trägerschicht transluzent ist und die Funktionsschichten und/oder die Klebemittelschicht zumindest in einem deckungsgleichen Flächenbereich eine Opazität aufweisen, sodass das Erkennen von unter der Klebemittelschicht auf der Oberfläche des Verpackungselements aufgebrachten Informationen für Waren zumindest in einem Teilbereich möglich ist.

Zum Erkennen ist es nicht erforderlich, dass die Schichten alle vollkommen klar und durchsichtig sind.

Besonders vorteilhaft ist es, wenn die Funktionsschichten bzw. die Klebemittelschicht dabei jeweils eine Opazität im Bereich von 0% bis 70%, vorzugsweise 0% bis 50%, aufweisen. Die Opazität kann mittels ISO 2471 gemessen werden.

Um das Erkennen von unter der Klebemittelschicht auf der Oberfläche des Verpackungsobjekts aufgebrachten Informationen für Waren zumindest in einem Teilbereich sicherstellen zu können, ist in einer weiteren Ausführungsform der Erfindung vorgesehen, dass die Trägerschicht transluzent ist und das Versiegelungselement eine Opazität aufweist, sodass das Erkennen von unter der Klebemittelschicht auf der Oberfläche des Verpackungselements aufgebrachten Informationen für Waren zumindest in einem Teilbereich möglich ist.

Besonders vorteilhaft in diesem Zusammenhang ist, wenn das Versiegelungselement eine Opazität im Bereich von 0% bis 80%, vorzugsweise 0% bis 50%, aufweist. D.h. die Summe aller Schichten des Versiegelungselements ergibt eine Opazität in diesem Bereich. Die Opazität kann mittels ISO 2471 gemessen werden.

Um sicherzustellen, dass das Erkennen von unter der Klebemittelschicht auf der Oberfläche des Verpackungselements aufgebrachten Informationen für Waren zumindest in einem Teilbereich nicht möglich ist, ist in einer Ausführungsform der Erfindung vorgesehen, dass die Trägerschicht transluzent ist und die Klebemittelschicht und/oder die Funktionsschichten zumindest in einem deckungsgleichen Flächenbereich eine Opazität aufweisen, sodass das Erkennen von unter der Klebemittelschicht auf der Oberfläche des Verpackungselements aufgebrachten Informationen für Waren zumindest in einem Teilbereich nicht möglich ist.

Besonders vorteilhaft ist es, wenn die Funktionsschichten und/oder die Klebemittelschicht dabei eine Opazität im Bereich 30% bis 100%, vorzugsweise 50% bis 100% aufweisen. Die Opazität kann mittels ISO 2471 gemessen werden.

Hierbei werden lediglich die Opazitäten der Klebemittelschicht sowie der Funktionsschichten berücksichtigt, nicht jedoch die Opazität der Trägerschicht.

Um sicherzustellen, dass das Erkennen von unter der Klebemittelschicht auf der Oberfläche des Verpackungselements aufgebrachten Informationen für Waren zumindest in einem Teilbereich nicht möglich ist, ist in einer Ausführungsform der Erfindung vorgesehen, dass die Trägerschicht transluzent ist und das Versiegelungselement eine Opazität aufweist, sodass das Erkennen von unter der Klebemittelschicht auf der Oberfläche des Verpackungselements aufgebrachten Informationen für Waren zumindest in einem Teilbereich nicht möglich ist.

Besonders vorteilhaft in diesem Zusammenhang ist, wenn das Versiegelungselement eine Opazität im Bereich von 30% bis 100%, vorzugsweise 50% bis 100%, aufweist. D.h. die Summe aller Schichten des Versiegelungselements ergibt eine Opazität in diesem Bereich. Die Opazität kann mittels ISO 2471 gemessen werden.

Selbstverständlich muss das flächige Versiegelungselement entsprechend der Beschaffenheit und Art des Untergrunds, d.h. hinsichtlich Farbe, Muster usw., bzw. der dargestellten Information angepasst werden.

Die Erfindung umfasst zumindest die folgenden Beispiele für flächige Versiegelungselemente:
Beispiel 1 (einfachste Ausführungsform), wobei die Schichten in der angeführten Reihenfolge aufeinanderfolgen:
   Trägerschicht,
   haftungssteuernde Schicht,
   Farbdarstellungsschicht,
   Klebemittelschicht.
Beispiel 2:
   Hier umfasst das flächige Versiegelungselement zusätzlich zu den Schichten in Beispiel 1 zumindest noch zwei weitere Funktionsschichten, nämlich eine weitere haftungssteuernde Schicht und eine weitere Farbdarstellungsschicht, sodass Symbole im flächigen Versiegelungselement sichtbar gemacht werden können.
Beispiel 3:
   Hier umfasst das flächige Versiegelungselement eine Trägerschicht sowie eine Klebemittelschicht und dazwischen angeordnet zwei bis vier Funktionsschichten. Zusätzlich ist unterhalb der Funktionsschichten und auf der Klebemittelschicht eine weitere Trägerschicht, vorzugsweise aus Papier, angeordnet. Es können weitere Funktionsschichten je nach Bedarf oberhalb und unterhalb der weiteren Trägerschicht angeordnet sein. Festgehalten wird, dass die oben genannten Beispiele nicht abschließend sind, sondern lediglich zur besseren Veranschaulichung der Erfindung dienen.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
Fig. 1 den schematischen Aufbau eines erfindungsgemäßen flächigen Versiegelungselements mit einer haftungssteuernden Schicht
Fig. 2 den ersten (Fig. 2A) und zweiten Zustand (Fig. 2B) des flächigen Versiegelungselements der Fig. 1
Fig. 3 den schematischen Aufbau eines erfindungsgemäßen Versiegelungselements mit zwei haftungssteuernden Schichten
Fig. 4 den ersten (Fig. 4A) und zweiten Zustand (Fig. 4B) des flächigen Versiegelungselements der Fig. 3.

### WEGE ZUR AUSFÜHRUNG DER ERFINDUNG

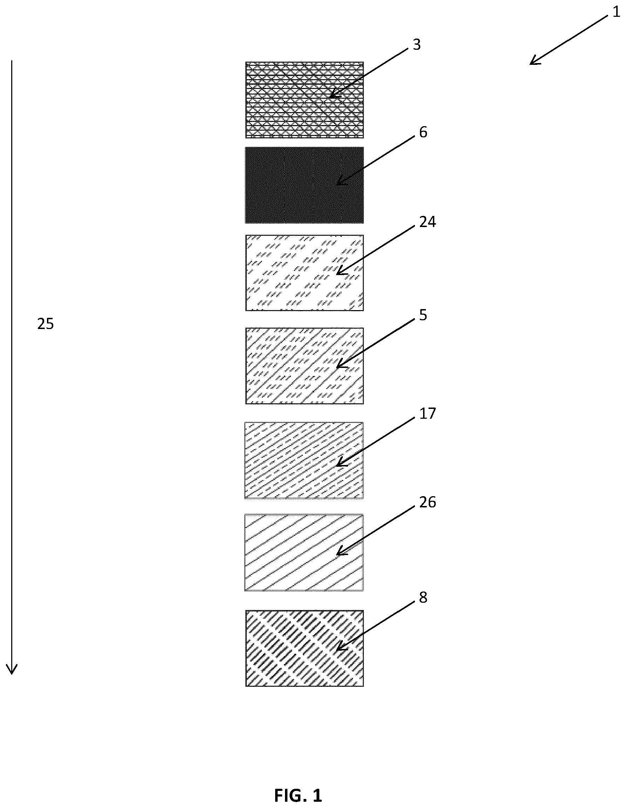

Fig. 1 zeigt den grob schematischen Aufbau einer einfachen Ausführungsform eines erfindungsgemäßen flächigen Versiegelungselements 1, wo alle aufeinanderfolgenden Schichten untereinander dargestellt sind.

Im Folgenden wird der Aufbau eines erfindungsgemäßen Versiegelungselements in einer ersten Richtung 25 beginnend von der Trägerschicht 3 in Richtung der Klebemittelschicht 8 beschrieben.

Das flächige Versiegelungselement 1 umfasst eine Trägerschicht 3 sowie eine Klebemittelschicht 8. Zwischen der Trägerschicht 3 und der Klebemittelschicht 8 sind die Funktionsschichten 4 angeordnet. Die Funktionsschichten 4 umfassen in dieser Ausführung eine Farbdarstellungsschicht 5, eine Zwischenschicht 24 sowie eine erste haftungssteuernde Schicht 6. Die Trägerschicht 3 und die Klebemittelschicht 8 weisen jeweils zwei Seiten auf, von denen eine den Funktionsschichten 4 zugewandt und einen von den Funktionsschichten 4 abgewandt ist.

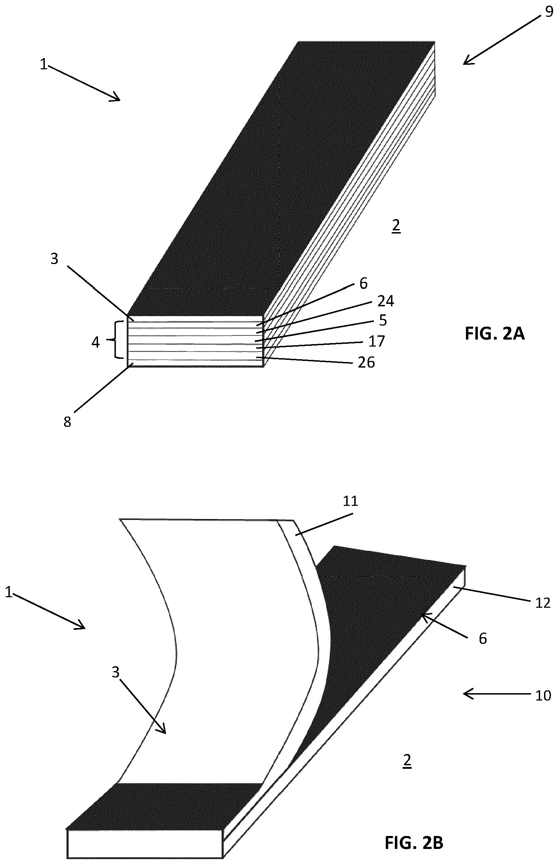

Wie in Fig. 1 dargestellt kann unterhalb der Farbdarstellungsschicht 5 eine weitere Farbdarstellungsschicht 17 vorhanden sein, um einen besonderen Farbeffekt im Rückstand 12 (siehe Fig. 2A, 2B) zu erhalten. Darüber hinaus könnte auch noch eine weitere Trägerschicht 26 vorhanden sein, vorzugsweise aus Papier, um das flächige Versiegelungselement 1 zu verstärken. Ohne die weitere Farbdarstellungsschicht 17 und die weitere Trägerschicht 26 würde oben genannte einfachste Ausführungsvariante aus Beispiel 1 vorliegen.

Die Trägerschicht 3 des flächigen Versiegelungselements 1 ist in diesem Fall aus einem hochkalandriertem Papier hergestellt. Die flächenbezogene Masse des Papiers beträgt im vorliegenden Beispiel 50g/m². Ganz allgemein kann aber das verwendete Papier eine flächenbezogene Masse von 8 g/m² bis 150 g/m², vorzugsweise 50 g/m², aufweisen. Darüber hinaus weist es eine Transluzenz von 70% auf. Ganz allgemein kann aber das verwendete Papier selbstverständlich auch eine Transluzenz aufweisen, die höher als 70% ist. Selbstverständlich könnte die Trägerschicht 3 aus Papier auch transparent sein, d.h. eine Transluzenz von 100% aufweisen.

Die Funktionsschichten 4 sowie die Klebemittelschicht 8 können ebenfalls transparent oder transluzent ausgebildet sein. In diesem Fall wird es ermöglicht, eine auf dem Untergrund 2 angeordnete Information im ersten und zweiten Zustand lesen zu können. Alternativ können die Funktionsschichten 4 und die Klebemittelschicht 8 opak ausgebildet sein. In diesem Fall wird erreicht, dass Informationen die unterhalb der Klebemittelschicht 8 und auf dem Untergrund 2 angeordnet sind, nicht lesbar sind, sondern vollständig abgedeckt werden. Darüber hinaus wird auch die farbliche Erscheinung des Versiegelungselements 1 durch den Untergrund 2 nicht gestört.

Dadurch, dass die Trägerschicht 3 aus Papier hergestellt ist, ist es möglich, das flächige Versiegelungselement 1 zusammen mit dem Untergrund 2 (siehe Fig. 2A und 2B) zu entsorgen bzw. zu recyceln. Der Untergrund 2 wird nämlich vorzugsweise Papier, Karton, Pappe oder Wellpappe sein. Selbstverständlich könnten erfindungsgemäße Versiegelungselemente 1 auch auf andere Untergründe 2 wie beispielsweise Glas, Metall oder Kunststoff aufgebracht werden, um einen hohen Schutz gegenüber Manipulation durch Flüssigkeiten zu erreichen.

Bei der Farbdarstellungsschicht 5 der Funktionsschichten 4 handelt es sich um einen handelsüblichen Lack (UV-härtendem oder wasserbasiertem Lack) oder eine Druckfarbe, und bei der haftungssteuernden Schicht 6 um einen sogenannten transparenten Release-Lack, der mindestens ein Silikon und/oder mindestens ein Wachs umfasst.

Die Klebemittelschicht 8 umfasst eine handelsübliche Klebstoffzusammensetzung. Im gegenständlichen Fall ist dieser ein acrylbasierter oder kautschukbasierter Haftkleber, welcher beispielsweise dispergiert, in Lösungsmittel gelöst oder als Hotmelt aufgebracht sein kann. Alternativ könnte auch ein Heißsiegelkleber zur Herstellung einer soliden Verbindung zwischen dem Versiegelungselement 1 und der Oberfläche des Untergrunds 2 verwendet werden. Alternativ kann ein Nassleim verwendet werden. Es können auch andere Klebstoffe mit vorteilhaftem Recyclingverhalten verwendet werden.

Die Klebemittelschicht 8 dient dazu das flächige Versiegelungselement 1 auf einem beliebigen Untergrund 2 zu befestigen. Vorzugsweise handelt es sich bei dem Untergrund 2 um einen Verpackungskarton. Vorzugsweise ist die Haftung mittels der Klebemittelschicht 8 am Untergrund 2 des erfindungsgemäßen Versiegelungselements 1 so stark, dass das Versiegelungselement 1 von dem Untergrund 2 nur unter Gewaltanwendung lösbar ist und verbleibt auch während eines später beschriebenen Ablösevorganges des Versiegelungselements 1 teilweise auf dem Untergrund 2.

Zusätzlich kann das Versiegelungselement 1 hier noch eine Silikonisierung auf der Trägerschicht 3 auf der den Funktionsschichten 4 abgewandten Seite umfassen. Oder das Versiegelungselement 1 kann auf der Klebemittelschicht (8), auf der den Funktionsschichten 4 abgewandten Seite, eine silikonisierte Abdeckschicht aus Papier oder Kunststoff zum Schutz der Klebemittelschicht aufweisen. Das Vorliegen einer solchen Silikonisierung oder silikonisierten Abdeckschicht ist jedoch nicht zwingend vorgesehen. Die silikonisierte Abdeckschicht kann aus silikonisiertem, hochkalandriertem Papier hergestellt sein, um das Aufwickeln eines Versiegelungselements 1 zu ermöglichen. Gleichzeitig fungiert die silikonisierte Abdeckschicht als Träger des Versiegelungselements 1, bevor es auf den zu versiegelnden Gegenstand aufgeklebt wird. D.h. die silikonisierte Abdeckschicht ermöglicht die Lagerung und Lieferung des Versiegelungselements in einem ersten Zustand. In einer noch einfacheren Variante des erfindungsgemäßen Versiegelungselements 1 sind zwischen der Trägerschicht 3 und der Klebemittelschicht 8 zwei Funktionsschichten 4 angeordnet, wobei die erste Funktionsschicht 4 eine haftungssteuernde Schicht 6 und die zweite Funktionsschicht eine transparente oder farbige Farbdarstellungsschicht 5 ist. In diesem Fall dient dann die Trägerschicht 3 als Farbdarstellungsschicht, weil die Trägerschicht 3 aus Papier nicht vollständig transparent ist, sondern transluzent ist, d.h. milchig trüb erscheint, und ihren Farbeindruck zwischen erstem 9 und zweitem Zustand 10 ändert.

Fig. 2 zeigt, dass das erfindungsgemäße flächige Versiegelungselement 1 gemäß Fig. 1 von einem ersten Zustand 9, siehe Fig. 2A, in einen zweiten Zustand 10, siehe Fig. 2B übergeführt wird. Festgehalten wird, dass die schwarze Färbung lediglich zur besseren Veranschaulichung des erfindungsgemäßen Farbumschlags dient und nicht mit der haftungssteuernden Schicht 6 gleichzusetzen ist. Im ersten Zustand 9 ist ein erfindungsgemäßes Versiegelungselement 1 auf einen Untergrund 2 aufgeklebt und geschlossen, d.h. es wurde nicht manipuliert.

Das Versiegelungselement 1 erscheint für einen Betrachter, der von außen auf die Trägerschicht 3 blickt, in ihrer Gesamtheit daher beispielsweise als trübes dunkles Blau, weil die Farbdarstellungsschicht 5 dunkelblau ist. Selbstverständlich ist nicht ausgeschlossen, dass das erfindungsgemäße Versiegelungselement 1 im ersten Zustand 9 sowie auch im zweiten Zustand 10 andere Farben oder auch Farbkombinationen aufweist. In der vorliegenden beispielhaften Ausführungsform handelt es sich somit um ein für einen Betrachter opak erscheinendes Versiegelungselement 1. Nicht ausgeschlossen ist allerdings, dass die Funktionsschichten 4 sowie die Klebemittelschicht 8 transparent bzw. transluzent ausgebildet sind, sodass das Versiegelungselement 1 für einen Betrachter durchsichtig bzw. durchscheinend erscheint. Selbstverständlich sind auch andere Farben sowohl in der opaken wie auch der transparenten bzw. transluzenten Ausführungsform nicht ausgeschlossen.

Das erfindungsgemäße Versiegelungselement 1 wird durch das Öffnen in einen zweiten Zustand 10 übergeführt. In einem zweiten Zustand 10 sind sowohl ein Rückstand 12 sowie eine zumindest teilweise abgezogene Schicht 11 ersichtlich. Bei dem Rückstand 12 handelt es sich um die auf dem Untergrund 2 verbliebenen Teile der Funktionsschichten 4 und die Klebeschicht 8. Bei der abgezogenen Schicht 11 handelt es sich um die zumindest teilweise abgelösten Teile der Funktionsschichten 4 sowie die Trägerschicht 3.

Durch das zumindest teilweise Ablösen von Funktionsschichten 4 ist nun auf Grund der vorhandenen haftungssteuernden Schicht 6, welche eine nur leicht lösbare Verbindung der Farbdarstellungsschicht 5 mit der Trägerschicht 3 bewirkt, im Rückstand 12 die dunkelblaue Farbschicht zu erkennen, welche nun noch etwas intensiver dunkelblau gefärbt ist, während die abgezogene Schicht 11 milchig-weiß erscheint. D.h. die haftungssteuernde Schicht (Release-Lackschicht) 6 trennt die Trägerschicht 3 und die Farbdarstellungsschicht 5 voneinander.

Durch die haftungssteuernde Schicht 6 wird es aber auch unmöglich, die abgezogene Schicht 11 auf den Rückstand 12 zurück zu applizieren, ohne dass dies bemerkt wird. Eine Manipulation ist damit bereits so gut wie ausgeschlossen. Legt man die abgezogene Schicht 11 wieder deckungsgleich zurück auf den Rückstand 12, so würde der Rückstand 12, durch die abgezogene Schicht 11 hindurchgesehen, in einem helleren Dunkelblau erscheinen.

Der Unterschied zwischen Farben wird durch den Farbabstand Delta E (ΔE), der die Koordinatendifferenz im L*a*b oder im Luv Farbraum darstellt, ermittelt. Da diese Farbräume visuell gleichabständig sind, kann daher dieser Wert für den sichtbaren Unterschied zwischen zwei Farben herangezogen werden. Hierzu wurden Messungen im L*a*b-Raum durchgeführt, wie dies etwa in der EN ISO 11664-4 "Colorimetry -- Part 4: CIE 1976 L*a*b* Colour space" normiert ist. Der L*a*b-Raum ist ein dreidimensionaler Farbenraum, bei dem der Helligkeitswert L* senkrecht auf der Farbebene (a*,b*) steht. Jede Farbe im Farbraum ist durch einen Farbort mit den kartesischen Koordinaten {L*, a*, b*} definiert. Auf der a*-Achse liegen sich Grün und Rot gegenüber, die b*-Achse verläuft zwischen Blau und Gelb. Die L*-Achse beschreibt die Helligkeit (Luminanz) der Farbe mit Werten von 0 (Schwarz) bis 100 (Weiß) .

Im ersten Zustand 9 erscheint das vorliegende Versiegelungselement 1, welches opake Funktionsschichten 4 bzw. eine opake Klebemittelschicht 8 aufweist, in einem trüben Dunkelblau mit den Werten {L*=47,33, a*= 12,49, b*=-33,22}. Im zweiten Zustand 10, wenn man die abgezogene Schicht 11 wieder deckungsgleich zurück auf den Rückstand 12 legt und mittels Andrücken durch die Wirkung der haftungssteuernden Schicht 6 festklebt und von oben auf die abgezogene Schicht 11 blickt, erscheint diese in einem Dunkelblau mit den Werten {L*=55,74, a*=6,89, b*=-22,51} also jedenfalls weißer. Der Unterschied beträgt also ΔL*=8,41, Δa*= -5,6, Δb*=10,71 und somit beträgt der Euklidische Abstand ΔE*Lab=14,72. Die wieder aufgeklebte Schicht 11 erscheint daher weißer als das Versiegelungselement 1 im ersten Zustand 9.

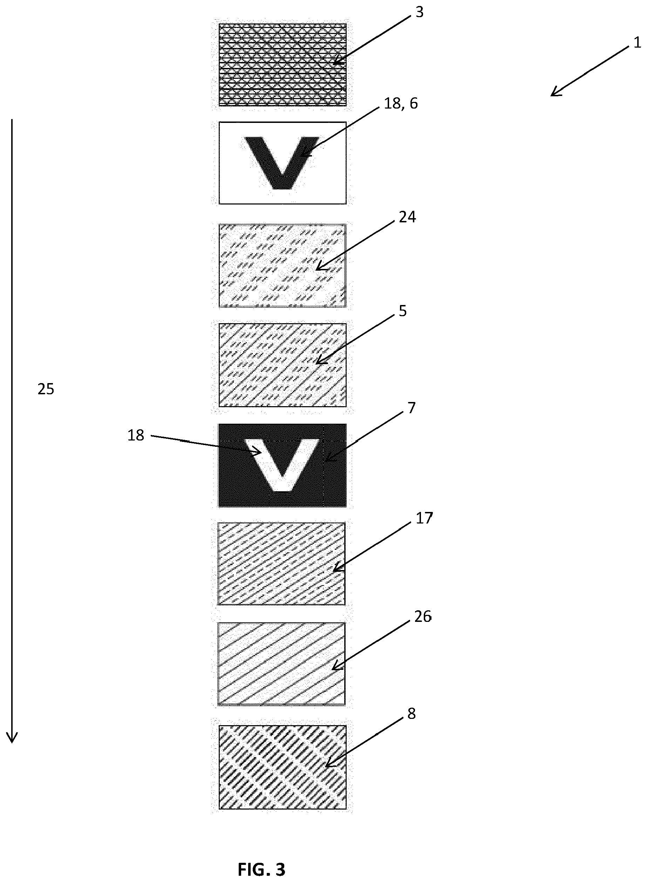

Fig. 3 zeigt auf schematische Weise den strukturellen Aufbau einer anderen Ausführungsform eines erfindungsgemäßen flächigen Versiegelungselements 1. Im Folgenden wird der Aufbau eines erfindungsgemäßen Versiegelungselements 1 gemäß der Fig. 3 in einer ersten Richtung 25 beginnend von der Trägerschicht 3 in Richtung der Klebemittelschicht 8 beschrieben.

Das flächige Versiegelungselement weist wie üblich eine Trägerschicht 3 sowie eine Klebemittelschicht 8 auf. Die Trägerschicht 3 ist wie bei Fig. 1 aus kalandriertem Papier hergestellt und die Klebemittelschicht 8 umfasst die Klebemittelzusammensetzung wie bei Fig. 1.

In der ersten Richtung 25 gesehen ist die Klebemittelschicht 8 die von der Trägerschicht 3 am weitesten entfernte Schicht, d.h. alle Funktionsschichten 4 sind zwischen der Trägerschicht 3 und der Klebemittelschicht 8 angeordnet.

In der ersten Richtung 25 gesehen dient die Trägerschicht 3 aufgrund ihrer milchigen Erscheinung als Farbschicht, in dem Sinn, dass sie im zweiten Zustand 10 dort, wo keine Farbe der Farbdarstellungsschicht 5 an ihr anhaftet (also im Bereich des Symbols V), ihren Farbeindruck ändert und noch milchiger erscheint. Auf die Trägerschicht 3 ist dann das Positiv eines Vs, welches in der gegenständlichen Ausführungsform des Versiegelungselements 1 das zumindest eine Symbol 18 darstellt, aufgetragen. Aufgetragen wird das Symbol 18 als die erste haftungssteuernde Schicht 6. Im gegenständlichen Fall ist die haftungssteuernde Schicht 6 wie in Fig. 1 ein transparenter Release-Lack, mit mindestens einem Silikon und/oder mindestens einem Wachs.

Die erste haftungssteuernde Schicht 6 bewirkt, dass die Oberflächenspannung herabgesetzt wird, sodass angrenzende Funktionsschichten 4, im vorliegenden Fall die Trägerschicht 3, vermindert bzw. gar nicht haften.

Auf dieser haftungssteuernden Schicht 6 ist weiters eine Zwischenschicht 24 angeordnet. Es versteht sich von selbst, dass diese Zwischenschicht 24 optional ist und damit nicht zwingend in jeder erfindungsgemäßen Ausführungsform der Erfindung vorliegen muss.

Es versteht sich auch von selbst, dass noch weitere Schichten vorhanden sein könnten, wie weitere Farbdarstellungsschichten und weitere haftungssteuernde Schichten.

Als weitere Schicht ist dann die Farbdarstellungsschicht 5 als nächste Funktionsschicht 4 unterhalb der Trägerschicht 3 angeordnet.

Da die erste haftungssteuernde Schicht 6 lediglich im Bereich des Symbols 18, also dem V, aufgetragen wurde, verbinden sich die Farbdarstellungsschicht 5 und die Zwischenschicht 24 außerhalb des Vs untrennbar mit der Trägerschicht 3. Diese Schichten können in der Folge beim Öffnen des

Versiegelungselements 1 nicht mehr voneinander gelöst werden. Im Bereich der ersten haftungssteuernden Schicht 6 wiederum verbinden sich die Schichten 5, 24 lediglich leicht lösbar. Es wird darauf hingewiesen, dass die schwarze Schicht in den Figuren dementsprechend nicht der haftungssteuernden Schicht 6 entspricht, sondern lediglich zur besseren Darstellung dient.

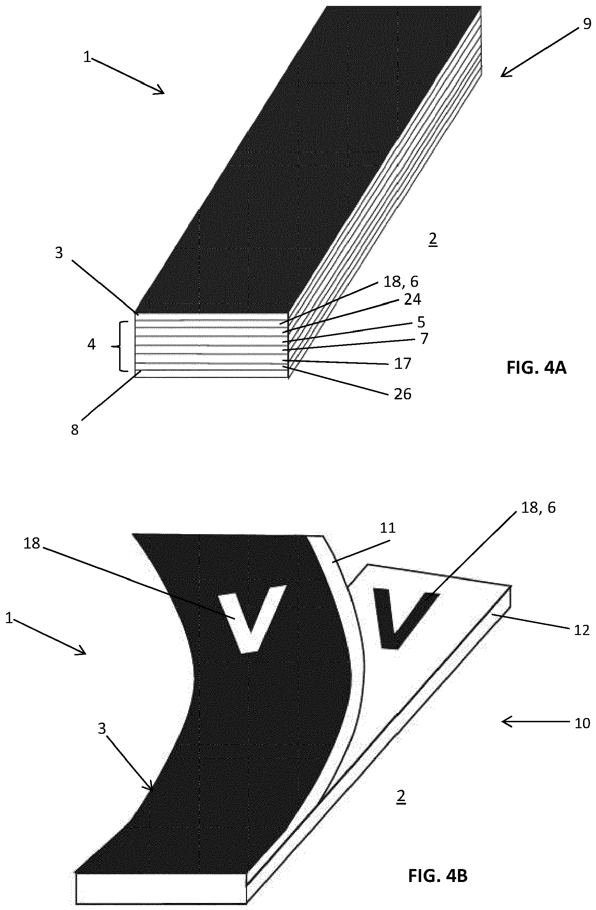

Als nächstes ist das Negativ des Symbols 18, also des Vs, als weitere haftungssteuernde Schicht 7 auf der Farbdarstellungsschicht 5 angeordnet. Diese haftungssteuernde Schicht 7 ist ebenfalls wie in Fig. 1 ein transparenter Release-Lack, mit mindestens einem Silikon und/oder mindestens einem Wachs. Optional kann unterhalb der haftungssteuernden Schicht 7 eine weitere Farbdarstellungsschicht 17 vorhanden sein, um einen besonderen Farbeffekt im Rückstand 12 (siehe Fig. 4) zu erhalten und/oder die weitere Farbdarstellungsschicht 17 von der Klebemittelschicht 8 zu trennen, falls keine weitere Trägerschicht 26 vorhanden ist. Eine optionale weitere Trägerschicht 26, vorzugsweise aus Papier, kann vorgesehen sein, um das flächige Versiegelungselement 1 zu verstärken und könnte auch die haftungssteuernde Schicht 7 von der Klebemittelschicht 8 trennen, falls keine weitere Farbdarstellungsschicht 17 vorhanden ist.

Als letztes ist die Klebemittelschicht 8 angeordnet.

Die Funktionsschichten 4 sind damit nur teilweise untrennbar miteinander verbunden, während andere bzw. Teile von Funktionsschichten 4 lediglich leicht lösbar miteinander verbunden sind, nämlich dort, wo sich die beiden haftungssteuernden Schichten 6,7 befinden.

Auch im Zusammenhang mit dieser Ausführungsform eines erfindungsgemäßen Versiegelungselements 1 sei festgehalten, dass es sich um ein opakes Versiegelungselement 1, d.h. ein Versiegelungselement 1, bei dem die Funktionsschichten 4 bzw. die Klebemittelschicht 8 opak ausgebildet sind, oder um ein transparentes Versiegelungselement 1, d.h. ein Versiegelungselement 1, bei dem alle Schichten 4, 8, transparent ausgebildet sind, oder um ein transluzentes Versiegelungselement d.h. bei dem die Schichten 4,8 transluzent ausgebildet sind, handeln kann.

Fig. 4 zeigt, dass das erfindungsgemäße flächige Versiegelungselement 1 gemäß Fig. 3 von einem ersten Zustand 9, siehe Fig. 4A, in einen zweiten Zustand 10, siehe Fig. 4B übergeführt werden kann. Festgehalten wird, dass die schwarze Färbung lediglich zur besseren Veranschaulichung des erfindungsgemäßen Farbumschlags dient und nicht mit der haftungssteuernden Schicht 6 gleichzusetzen ist. Im ersten Zustand 9 ist ein erfindungsgemäßes Versiegelungselement 1 auf einen Untergrund 2 aufgeklebt und geschlossen, d.h. es wurde nicht manipuliert, und das Symbol 18 ist für einen Betrachter nicht erkennbar. Das Versiegelungselement 1 erscheint für einen Betrachter, der von außen auf die Trägerschicht 3 blickt, in seiner Gesamtheit daher beispielsweise als trübes dunkles Blau. In der vorliegenden beispielhaften Ausführungsform handelt es sich somit um ein für einen Betrachter opak erscheinendes Versiegelungselement 1, d.h. ein Versiegelungselement, bei dem die Funktionsschichten 4 sowie die Klebemittelschicht 8 opak ausgebildet sind. Nicht ausgeschlossen ist allerdings, dass die Funktionsschichten 4 sowie die Klebemittelschicht 8 transparent oder transluzent ausgebildet sind, sodass das Versiegelungselement 1 für einen Betrachter durchscheinend erscheint. Selbstverständlich ist nicht ausgeschlossen, dass das erfindungsgemäße Versiegelungselement 1 im ersten Zustand 9 sowie auch im zweiten Zustand 10 andere Farben oder auch Farbkombinationen aufweist. Legt man die abgezogene Schicht 11 wieder deckungsgleich zurück auf den Rückstand 12, so würde der Rückstand 12, durch das V (Symbol 18) der abgezogenen Schicht 11 hindurchgesehen, in einem Dunkelblau erscheinen, aber nicht mehr so stark dunkelblau, also helleren Dunkelblau, wie im ersten Zustand 9, bedingt durch die milchig-weiße Färbung der Trägerschicht 3, bzw. im restlichen Bereich der abgezogenen Schicht 11, wo die dunkelblaue Farbe auf der Trägerschicht 3 ja anhaftet.

Der Unterschied im Farbeindruck entspricht im Wesentlichen dem Unterschied der Helligkeitswerte L* wie bei Fig. 1 erläutert.

Das erfindungsgemäße Versiegelungselement 1 wird durch das Öffnen in einen zweiten Zustand 10 übergeführt. In einem zweiten Zustand 10 sind sowohl ein Rückstand 12 sowie eine zumindest teilweise abgezogene Schicht 11 ersichtlich. Bei dem Rückstand 12 handelt es sich um die auf dem Untergrund 2 verbliebenen Teile der Funktionsschichten 4 und die Klebeschicht 8. Bei der abgezogenen Schicht 11 handelt es sich um die zumindest teilweise abgelösten Teile der Funktionsschichten 4 sowie die Trägerschicht 3.

Durch das zumindest teilweise Ablösen von Funktionsschichten 4 ist nun auf Grund der beiden haftungssteuernden Schichten 6,7, welche eine nur leicht lösbare Verbindung der Farbdarstellungsschicht 5 mit dem Positiv des Symbols 18, also im vorliegenden Fall das V, sowie der Trägerschicht 3 bewirken, im Rückstand 12 bzw. der abgezogenen Schicht 11, das Symbol 18 ersichtlich. D.h. die erste haftungssteuernde Schicht (Release-Lackschicht) 6 trennt die Trägerschicht 3 und die Farbdarstellungsschicht 5 voneinander und sorgt für die farbliche Ausbildung des Symbols 18.

Wie bereits erwähnt ist das Symbol 18 in den Fig. 3 und 4 als V ausgebildet. Es versteht sich jedoch von selbst, dass das Symbol grundsätzlich jede beliebige Form haben kann bzw. sogar mehrere Symbole 18 miteinander kombiniert werden können.

Durch die beiden haftungssteuernden Schichten 6,7 wird es aber auch unmöglich, die abgezogene Schicht 11 auf den Rückstand 12 zurück zu applizieren, ohne dass dies bemerkt wird. Eine unbemerkte Manipulation ist damit bereits so gut wie ausgeschlossen. Zudem wird der Kontrast im zweiten Zustand 10 deutlich erhöht, was den Hinweis auf eine Manipulation beim Anwender erleichtert. Dies ist bedingt durch die für einen Anwender erkennbare Änderung des Farbabstandes Delta E (ΔE). Dies ist für einen Anwender insbesondere gut erkennbar, weil der Farbabstand Delta E (ΔE) des Abschnitts, in dem im zweiten Zustand 10 keine Farbe der mindestens einen Farbdarstellungsschicht 5 anhaftet, im zweiten Zustand 10, wenn die abgezogene Schicht 11 deckungsgleich auf den Rückstand 12 angeordnet ist, um bevorzugt 0 bis 90, bevorzugt um zumindest 7 bis 50, anders ist als im ersten Zustand 9.

Auf Grund dessen, dass die Trägerschicht 3 darüber hinaus aus kalandriertem Papier hergestellt ist, wird die Möglichkeit zur Manipulation noch weiter verringert, da Papier zwar reißfest genug ist, um als Trägerschicht 3 für das erfindungsgemäße Versiegelungselement 1 zu dienen, aber zu wenig reißfest ist, um einfach entfernt und damit manipuliert werden zu können. Zusätzlich wird die Trägerschicht 3 beim Überführen in den zweiten Zustand 10 verformt, weil dünnes Papier bzw. Trägerschichten 3 aus Papier ganz allgemein zum Aufrollen der Ränder neigen.

Außerdem ist die Löslichkeit von Papier gegenüber Flüssigkeiten gegeben, was eine Manipulation des Versiegelungselements 1 mit Hilfe von Lösungsmitteln sichtbar macht. D.h. wenn ein Verpackungsobjekt, welches mit dem erfindungsgemäßen Versiegelungselement 1 aus Papier versehen ist, zu Manipulationszwecken in Wasser gegeben wird, kann das Wasser durch die Trägerschicht 3 rasch hindurchdringen, wodurch sich zumindest eine dieser Schichten 4,5,8 im nassen oder befeuchteten Zustand zumindest partiell von der Trägerschicht 3 aus Papier ablöst, ohne jedoch von einem ersten Zustand 9 in einen zweiten Zustand 10 überzugehen. Wenn nun die Trägerschicht 3 abgezogen wird, liegt in der Folge ein Rückstand 12 und eine abgezogene Schicht 11 vor, wobei zumindest partiell keine der Funktionsschichten 4 auf der Trägerschicht 3 anhaftet. Wenn die Trägerschicht 3 im nassen oder feuchten Zustand abgezogen wird, kann die Trägerschicht 3 nicht mehr derartig mit den Funktionsschichten 4 verbunden werden, dass, sobald das Versiegelungselement 1 getrocknet ist, es wieder funktionsfähig von einem ersten Zustand 9 in einen zweiten Zustand 10 übergeführt werden kann.

Handelt es sich bei dem Untergrund 2 jedoch um einen "faserigen" Untergrund, wie beispielsweise Wellpappe oder Karton, so kann es passieren, dass das vollständige Versiegelungselement im ersten Zustand 9 vom Untergrund 2 mit der obersten Schicht des Untergrunds 2 abgezogen bzw. abgerissen wird. In diesem Fall ist das flächige Versiegelungselement 1 zwar nach dem Trocknen auch wieder funktionsfähig, allerdings befindet es sich nicht mehr auf dem gewünschten Untergrund 2 und Teile des Untergrunds 2 haften auf der Klebemittelschicht 8, was ein Wiederverwenden des Versiegelungselements 1 erschwert.

Im Fall, dass das flächige Versiegelungselement 1 von einem ersten 9 in einen zweiten Zustand 10 auf Grund von Feuchtigkeit übergeführt wird, umfasst der Rückstand 12 dann die Klebemittelschicht 8 und alle Funktionsschichten 4, während die abgezogene Schicht 11 lediglich die Trägerschicht 3 ohne Funktionsschicht 4 oder die Trägerschicht 3 sowie Teile der Funktionsschichten 4 umfasst. Die Trägerschicht 3 kann in der Folge aber nicht mehr so auf die abgelösten Funktionsschichten 4 aufgebracht werden, dass ein Überführen vom ersten Zustand 9 in den zweiten Zustand 10 ermöglicht wird, da keine erneute Verbindung der Trägerschicht 3 zu den Funktionsschichten 4 hergestellt werden kann.

Wird das Versiegelungselement 1 allerdings nach dem Befeuchten, ohne dass es von einem ersten Zustand 9 in einen zweiten Zustand 10 übergeführt wurde, oder anderweitig beschädigt oder manipuliert wurde, wieder getrocknet, ist die erfindungsgemäße Funktionalität wieder hergestellt, sodass das Versiegelungselement 1 erneut von einem ersten Zustand 9 in einen zweiten Zustand 10 überführt werden kann, wobei der erfindungsgemäße Farbeffekt wahrgenommen werden kann.

Weiters wäre es bei den gezeigten Ausführungsbeispielen vorstellbar, dass das erfindungsgemäße flächige Versiegelungselement 1 eine Lasche (nicht dargestellt) aufweist, welche mit der Trägerschicht 3 verbunden ist. Besagte Lasche erleichtert einem Benutzer das Abziehen der Trägerschicht 3 bzw. das Überführen des erfindungsgemäßen Versiegelungselements 1 vom ersten Zustand 9 in den zweiten Zustand 10.

Sollte erwünscht sein, dass die abgezogene Schicht 11 sich nicht vollständig vom restlichen flächigen Versiegelungselement 1 trennt, kann am Rand des Versiegelungselements ein Bereich vorgesehen werden, in welchem Bereich keine haftungssteuernde Schicht 6, 7 aufgetragen wird, sodass sich die Farbdarstellungsschicht 5 untrennbar mit der Trägerschicht 3 verbindet. Ein vollständiges Abziehen der abgezogenen Schicht 11 ist dadurch lediglich durch eine stärkere Aufwendung von Kraft möglich, welche jedoch im Normalfall das Versiegelungselement 1 beschädigen würde. Die abgezogene Schicht 11 verbleibt im unbeschädigten Zustand damit auf dem flächigen Versiegelungselement 1. Dadurch wird der Schwund des Versiegelungselements 1 in die Umwelt verringert. Das Versiegelungselement 1 kann somit ebenfalls der werkstofflichen Verwertung zugeführt werden.

Des Weiteren wird festgehalten, dass die Ausführungsvarianten des erfindungsgemäßen Versiegelungselements grundsätzlich auch bei einer opaken Trägerschicht ausgeführt werden können.

### BEZUGSZEICHENLISTE

- 1: flächiges Versiegelungselement
- 2: Untergrund
- 3: Trägerschicht
- 4: Funktionsschichten
- 5: Farbdarstellungsschicht
- 6: erste haftungssteuernde Schicht
- 7: zweite haftungssteuernde Schicht
- 8: Klebemittelschicht
- 9: erster Zustand des flächigen Versiegelungselements
- 10: zweiter Zustand des flächigen Versiegelungselements
- 11: abgezogene Schicht
- 12: Rückstand
- 13: -
- 14: -
- 15: -
- 16: -
- 17: weitere Farbdarstellungsschicht
- 18: Symbol
- 19: -
- 24: Zwischenschicht
- 25: erste Richtung
- 26: weitere Trägerschicht

## Patentansprüche

1. Flächiges Versiegelungselement (1) zur Applikation auf einen Untergrund (2), umfassend eine Trägerschicht (3) und mehrere Funktionsschichten (4),
wobei die Funktionsschichten (4) mindestens eine Farbdarstellungsschicht (5) und eine haftungssteuernde Schicht (6) umfassen,
wobei das Versiegelungselement (1) weiters eine Klebemittelschicht (8) zur Befestigung am Untergrund (2) aufweist,
wobei die Funktionsschichten (4) zwischen der Trägerschicht (3) und der Klebemittelschicht (8) angeordnet sind,
wobei die Trägerschicht (3) zumindest partiell von den Funktionsschichten (4) ablösbar ist, um das Versiegelungselement (1) von einem ersten Zustand (9) in einen zweiten Zustand (10) zu bringen, wobei der zweite Zustand (10) nicht in den ersten Zustand (9) überführbar ist,
wobei das Versiegelungselement (1) im zweiten Zustand (10) eine abgezogene Schicht (11), umfassend zumindest die zumindest partiell abgelöste Trägerschicht (3), und einen Rückstand (12), umfassend zumindest die Klebemittelschicht (8) und zumindest Teile der mindestens einen Farbdarstellungsschicht (5), umfasst,
**dadurch gekennzeichnet, dass** die Trägerschicht (3) aus Papier hergestellt ist.

2. Flächiges Versiegelungselement (1) nach Anspruch 1, **dadurch gekennzeichnet, dass** die Trägerschicht (3) transparent oder transluzent ist, sodass die abgezogene Schicht (11) in zumindest einem Bereich, in dem keine oder lediglich geringe Anteile der mindestens einen Farbdarstellungsschicht (5) anhaften, wenn die abgezogene Schicht (11) deckungsgleich auf dem Rückstand (12) angeordnet ist, einen anderen Farbeindruck aufweist als derselbe Bereich der Trägerschicht (3) im ersten Zustand (9) in einer Blickrichtung auf die Trägerschicht (3).

3. Flächiges Versiegelungselement (1) nach Anspruch 1 oder 2, **dadurch gekennzeichnet, dass** alle Schichten zumindest in einem deckungsgleichen Flächenbereich transparent sind oder eine Transluzenz aufweisen.

4. Flächiges Versiegelungselement (1) nach einem der Ansprüchen 1 bis 3, **dadurch gekennzeichnet, dass** die Trägerschicht (3) transluzent ist und die Klebemittelschicht (8) und/oder die Funktionsschichten (4) zumindest in einem deckungsgleichen Flächenbereich opak ist/sind.

5. Flächiges Versiegelungselement (1) nach Anspruch 1, **dadurch gekennzeichnet, dass** die Trägerschicht (3) opak ist.

6. Flächiges Versiegelungselement (1) nach Anspruch 2 oder 3, **dadurch gekennzeichnet, dass** jener Bereich der abgezogenen Schicht (11), dem keine oder nur geringe Anteile der mindestens einen Farbdarstellungsschicht (5) anhaften, wenn die abgezogene Schicht (11) deckungsgleich auf dem Rückstand (12) angeordnet ist, einen Farbabstand Delta E (ΔE) von mehr als 0 bis 7,0, bevorzugt von zumindest 0,1 bis 5,0, und besonders bevorzugt um 0,1 bis 3,0, aufweist gegenüber demselben Bereich der Trägerschicht (3) im ersten Zustand (9) in einer Blickrichtung auf die Trägerschicht (3).

7. Flächiges Versiegelungselement (1) nach Anspruch 4, **dadurch gekennzeichnet, dass** jener Bereich der abgezogenen Schicht (11), dem keine oder nur geringe Anteile der mindestens einen Farbdarstellungsschicht (5) anhaften, wenn die abgezogene Schicht (11) deckungsgleich auf dem Rückstand (12) angeordnet ist, einen Farbabstand Delta E (ΔE) von zumindest 0 bis 90, bevorzugt von zumindest 7 bis 50, aufweist gegenüber demselben Bereich der Trägerschicht (3) im ersten Zustand (9) in einer Blickrichtung auf die Trägerschicht (3).

8. Flächiges Versiegelungselement (1) nach einem der vorhergehenden Ansprüche, **dadurch gekennzeichnet, dass** die Trägerschicht (3) aus kalandriertem Papier hergestellt ist.

9. Flächiges Versiegelungselement (1) nach einem der vorhergehenden Ansprüche, **dadurch gekennzeichnet, dass** das Versiegelungselement (1) weiters eine zweite haftungssteuernde Schicht (7) zwischen der Trägerschicht (3) und der Klebemittelschicht (8) umfasst, um beim Ablösen der Trägerschicht (3) zumindest Teile der mindestens einen Farbdarstellungsschicht (5) herauszutrennen und an der Trägerschicht (3) anzuhaften.

10. Flächiges Versiegelungselement (1) nach einem der vorhergehenden Ansprüche, **dadurch gekennzeichnet, dass** die Trägerschicht (3) eine flächenbezogene Masse im Bereich von 8 g/m² bis 150 g/m², vorzugsweise von 30 g/m² bis 120 g/m², besonders bevorzugt von 50 g/m² aufweist.

11. Flächiges Versiegelungselement (1) nach einem der vorhergehenden Ansprüche, **dadurch gekennzeichnet, dass** eine weitere Trägerschicht (26) zwischen den Funktionsschichten (4) und der Klebemittelschicht (8) oder zwischen zwei Funktionsschichten (4) angeordnet ist.

12. Flächiges Versiegelungselement (1) nach einem der vorhergehenden Ansprüche, **dadurch gekennzeichnet, dass** das Versiegelungselement (1) ein Etikett ist.

13. Flächiges Versiegelungselement (1) nach einem der Ansprüche 1 bis 11, **dadurch gekennzeichnet, dass** das Versiegelungselement (1) ein Klebeband ist.

14. Flächiges Versiegelungselement (1) nach einem der vorhergehenden Ansprüche, **dadurch gekennzeichnet, dass** auf der Klebemittelschicht (8) auf der den Funktionsschichten (4) abgewandten Seite eine silikonisierte Abdeckschicht aus Papier oder Kunststoff zum Schutz der Klebemittelschicht (8) angeordnet ist.

15. Flächiges Versiegelungselement (1) nach einem der vorhergehenden Ansprüche, **dadurch gekennzeichnet, dass** das flächige Versiegelungselement Stanzungen aufweist, um eine Manipulation durch vollständiges Ablösen zu erschweren oder um das Durchtrennen des Versiegelungselements zur Öffnung einer Verpackung zu erleichtern.

16. System aus einem flächigen Versiegelungselement (1) und einem Verpackungsobjekt für Waren, wobei das Versiegelungselement (1) eine Trägerschicht (3) und mehrere Funktionsschichten (4) umfasst,
wobei die Funktionsschichten (4) mindestens eine Farbdarstellungsschicht (5) und eine haftungssteuernde Schicht (6) umfassen,
wobei das Versiegelungselement (1) weiters eine Klebemittelschicht (8) zur Befestigung an einem Untergrund (2) aufweist,
wobei die Funktionsschichten (4) zwischen der Trägerschicht (3) und der Klebemittelschicht (8) angeordnet sind,
wobei die Trägerschicht (3) zumindest partiell von den Funktionsschichten (4) ablösbar ist, um das Versiegelungselement (1) von einem ersten Zustand (9) in einen zweiten Zustand (10) zu bringen, wobei der zweite Zustand (10) nicht in den ersten Zustand (9) überführbar ist,
wobei das Versiegelungselement (1) im zweiten Zustand (10) eine abgezogene Schicht (11), umfassend zumindest die zumindest partiell abgelöste Trägerschicht (3), und einen Rückstand (12), umfassend zumindest die Klebemittelschicht (8) und zumindest Teile der mindestens einen Farbdarstellungsschicht (5), umfasst, **dadurch gekennzeichnet, dass** die Trägerschicht (3) aus Papier hergestellt ist.

17. System nach Anspruch 16, **dadurch gekennzeichnet, dass** alle Schichten zumindest in einem deckungsgleichen Flächenbereich transparent sind oder eine Transluzenz aufweisen, sodass das Erkennen von unter der Klebemittelschicht (8) auf der Oberfläche des Verpackungselements aufgebrachten Informationen für Waren zumindest in einem Teilbereich möglich ist.

18. System nach Anspruch 16, **dadurch gekennzeichnet, dass** die Trägerschicht (3) transluzent ist und das Versiegelungselement (1) eine Opazität aufweist, sodass das Erkennen von unter der Klebemittelschicht (8) auf der Oberfläche des Verpackungselements aufgebrachten Informationen für Waren zumindest in einem Teilbereich nicht möglich ist.
